(19) Europäisches Patentamt
European Patent Office
Office européen des brevets

(11) EP 3 956 712 B1

(12) **FASCICULE DE BREVET EUROPEEN**

(45) Date de publication et mention de la délivrance du brevet:
**19.07.2023 Bulletin 2023/29**

(21) Numéro de dépôt: **20704294.6**

(22) Date de dépôt: **11.02.2020**

(51) Classification Internationale des Brevets (IPC):
***G03H 1/26*** *(2006.01)* ***G06N 3/045*** *(2023.01)*
***G06N 3/084*** *(2023.01)* ***G02B 21/36*** *(2006.01)*
***G02B 21/00*** *(2006.01)* ***G02B 27/42*** *(2006.01)*
***G03H 1/04*** *(2006.01)* ***G06T 7/00*** *(2017.01)*
***G03H 1/08*** *(2006.01)*

(52) Classification Coopérative des Brevets (CPC):
**G02B 21/367; G02B 21/0064; G02B 27/4244; G03H 1/0443; G03H 1/0866; G06N 3/045; G06N 3/084; G06T 7/0012;** G03H 2001/266; G03H 2222/18; G03H 2226/13; G06F 18/251; G06T 2207/10056; G06T 2207/20084; G06T 2207/30024; (Cont.)

(86) Numéro de dépôt international:
**PCT/EP2020/053481**

(87) Numéro de publication internationale:
**WO 2020/165176 (20.08.2020 Gazette 2020/34)**

(54) **DISPOSITIF DE MICROSCOPIE HOLOGRAPHIQUE HYPERSPECTRALE PAR FUSION DE CAPTEURS**

VORRICHTUNG ZUR HYPERSPEKTRALEN HOLOGRAPHISCHEN MIKROSKOPIE DURCH SENSORFUSION

DEVICE FOR HYPERSPECTRAL HOLOGRAPHIC MICROSCOPY BY SENSOR FUSION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.02.2019 FR 1901367**

(43) Date de publication de la demande:
**23.02.2022 Bulletin 2022/08**

(73) Titulaire: **LYSIA**
**26350 Crépol (FR)**

(72) Inventeur: **GERMAIN, Gerald**
**26350 CREPOL (FR)**

(74) Mandataire: **Fidal Innovation**
**4-6 avenue d’Alsace**
**92400 Courbevoie (FR)**

(56) Documents cités:
**WO-A1-2009/154765 US-A1- 2018 292 784**

- **EITEL ANDREAS ET AL: "Multimodal deep learning for robust RGB-D object recognition", 2015 IEEE/RSJ INTERNATIONAL CONFERENCE ON INTELLIGENT ROBOTS AND SYSTEMS (IROS), IEEE, 28 septembre 2015 (2015-09-28), pages 681-687, XP032831667, DOI: 10.1109/IROS.2015.7353446**
- **Ling Wei ET AL: "Neural network control of focal position during time-lapse microscopy of cells", bioRxiv, 13 décembre 2017 (2017-12-13), XP055519892, DOI: 10.1101/233940 Extrait de l’Internet: URL:https://www.biorxiv.org/content/biorxiv/early/2017/12/13/233940.full.pdf [extrait le 2019-11-12]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



(Cont. page suivante)

(52) Classification Coopérative des Brevets (CPC):
(Cont.)
G06V 10/141

## Description

### DOMAINE TECHNIQUE

La présente invention se rapporte à un dispositif de microscopie d'analyse d'un échantillon.

### ART ANTERIEUR

Différentes méthodes de compression de l'image d'une scène hyperspectrale sont décrites dans la littérature. L'objet de ces méthodes est d'acquérir l'image de la scène hyperspectrale en une seule acquisition sans nécessiter de balayer la scène dans les dimensions spatiales ou spectrale.

Par exemple, la thèse « Non-scanning imaging spectrometry », Descour, Michael Robert, 1994, The university of Arizona, propose une façon d'acquérir une seule image en deux dimensions de la scène observée contenant toutes les informations sur l'influence des différentes longueurs d'onde. Cette méthode, dénommée CTIS (pour « *Computed-Tomography Imaging Spectrometer* »), propose de capturer une image compressée de la scène observée au moyen d'un réseau de diffraction disposé en amont d'un capteur numérique. Cette image compressée acquise par le capteur numérique prend la forme de multiples projections pour lesquelles chaque projection permet de représenter l'image de la scène observée et contient l'ensemble des informations spectrales de la scène.

Cette méthode, bien que satisfaisante pour résoudre la problématique d'acquisition instantanée de la scène hyperspectrale, nécessite des algorithmes complexes et coûteux en ressources de calcul afin d'estimer la scène hyperspectrale non compressée en trois dimensions. La publication « Review of snapshot spectral imaging technologies », Nathan Hagen, Michael W. Kudenov, Optical Engineering 52(9), September 2013, présente une comparaison des méthodes d'acquisition hyperspectrales ainsi que les complexités algorithmiques associées à chacune d'elles.

En effet, la méthode CTIS nécessite un processus d'estimation basé sur une matrice en deux dimensions représentant la fonction de transfert de l'optique de diffraction. Cette matrice doit être inversée pour reconstituer l'image hyperspectrale en trois dimensions. La matrice de la fonction de transfert n'étant pas complètement définie, des méthodes d'inversion matricielle itératives et coûteuses en ressources de calcul permettent d'approcher le résultat pas à pas.

En outre, l'image hyperspectrale en trois dimensions reconstruite par ces méthodes de calcul ne contient pas d'information spatiale ou spectrale supplémentaires par rapport à l'image compressée en deux dimensions obtenue par ces méthodes d'acquisitions. L'estimation par le calcul de l'image hyperspectrale en trois dimensions n'est donc pas nécessaire pour une détection directe des particularités recherchées dans la scène.

L'holographie est inventée en 1947 par Dennis Gabor. Depuis, différentes améliorations ont été apportées au procédé. Tout particulièrement l'holographie numérique, dont les fondements sont posés en 1967 par Goodman, apporte la possibilité de traiter et reconstruire des hologrammes depuis une acquisition numérique de figures d'interférences. Yamaguchi introduit en 2002, l'holographie numérique couleur, permettant une acquisition et une reconstruction de l'hologramme prenant en compte les couleurs de l'objet. Diverses améliorations ont été proposées depuis. Par exemple, la thèse «Méthodes d'holographie numérique couleur pour la métrologie sans contact en acoustique et mécanique », Patrice Tankam, 2011, présente différents procédés de l'état de l'art permettant d'acquérir un hologramme couleur numériquement et le reconstituer.

Ces méthodes ne proposent pas la possibilité d'acquérir et de reconstruire un hologramme hyperspectral de l'objet observé. De même, les méthodes de reconstruction de l'hologramme depuis l'acquisition des figures d'interférences des rayons objet et de référence, basées sur la transformée de Fresnel, nécessitent des calculs coûteux en ressources de calcul et de mémoire.

Des méthodes de traitement d'image dans l'objectif de détecter des particularités sont largement décrites dans la littérature scientifique. Par exemple une méthode basée sur des réseaux de neurones est décrite dans « auto-association by multilayer perceptrons and singular value décomposition. » Biological cybernetics, 59(4):291-294, 1988. ISSN 0340-1200, H. Bourlard and Y Kamp. A.

De nouvelles méthodes basées sur des réseaux de neurones profonds et convolutifs sont également largement employées avec des résultats présentant des taux de fausses détections très bas. Par exemple, une telle méthode est décrite dans « Stacked Autoencoders Using Low-Power Accelerated Architectures for Object Recognition in Autonomous Systems », Neural Processing Letters, vol. 43, no. 2, pp. 445-458,2016, J. Maria, J. Amaro, G. Falcao, L. A. Alexandre

Ces méthodes sont particulièrement adaptées à détecter des éléments dans une image couleur ; possédant généralement 3 canaux - Rouge, Vert et Bleu ; d'une scène en prenant en compte les caractéristiques de formes, de textures et de couleurs de la particularité à détecter. Ces méthodes considèrent l'image homogène, et traitent par convolution l'entièreté de l'image par le même procédé.

Le traitement des images compressées en deux dimensions obtenues par la méthode CTIS ne peut donc pas être opéré au moyen d'un réseau de neurones profond et convolutif standard. En effet, les images obtenues par ces méthodes ne sont pas homogènes, et contiennent des particularités non linéaires dans les dimensions soit spectrales, soit spatiales.

On connaît également un dispositif de mesure et d'analyse holographique et hyperspectrale d'un échantillon tel que décrit dans WO2009/154765A1.

## EXPOSE DE L'INVENTION

La présente invention se propose de détecter directement les particularités recherchées dans un échantillon au moyen d'un réseau de neurones formels, profond et convolutif, dont l'architecture est adaptée à une fusion des informations et une détection directe, appliquée sur un hologramme de l'échantillon contenant les informations de phase et d'amplitude de l'échantillon et une image compressée et en deux dimensions de la lumière traversant l'échantillon contenant les informations spectrales de l'image dudit l'échantillon. Selon une réalisation, les images hologramme et compressée de l'échantillon sont ainsi fusionnées au moyen dudit réseau de neurones formels, profond et convolutif et une détection directe desdites particularités recherchées est faite depuis l'information fusionnée au moyen de ce même réseau de neurones formels, profond et convolutif.

A cet effet, l'invention concerne un dispositif de mesure et d'analyse holographique et hyperspectrale d'un échantillon, ledit dispositif comportant :

- un dispositif d'acquisition d'une image de l'échantillon contenant les informations spectrale et d'amplitude du signal lumineux illuminant ledit échantillon et des figures d'interférences holographiques d'un faisceau lumineux de référence et d'un faisceau lumineux ayant illuminé ledit échantillon contenant les informations d'amplitude et de phase du signal lumineux illuminant ledit échantillon ; et
- un dispositif d'illumination dudit échantillon ; et
- un dispositif de reconstruction de l'image holographique hyperspectrale et d'analyse des propriétés d'amplitude, de phase et de spectre de la lumière illuminant ledit échantillon intégrant un réseau de neurones profond et convolutif architecturé pour calculer une probabilité de présence de la ou les particularités recherchées dans ledit échantillon depuis l'image holographique hyperspectrale et générant une image pour chaque particularité recherchée dont la valeur de chaque pixel aux cordonnées *x* et *y* correspond à la probabilité de présence de ladite particularité aux mêmes coordonnées *x et y* de l'image dudit échantillon.

Selon un mode de réalisation, le dispositif d'acquisition comprend d'une part un dispositif d'acquisition d'une image compressée de l'échantillon contenant lesdites informations spectrale et d'amplitude du signal lumineux illuminant, notamment traversant ou réfléchi par l'échantillon, et d'autre part un dispositif d'acquisition d'une image desdites figures d'interférences holographiques, dans lequel le réseau de neurones est architecturé pour calculer la probabilité de présence de la ou les particularités recherchées dans ledit échantillon depuis l'image compressée et la figure d'interférences holographiques du faisceau de référence avec le faisceau illuminant, notamment traversant ou réfléchi par l'échantillon, ledit réseau de neurones profond et convolutif étant architecturé de façon à fusionner les informations des capteurs de l'image diffractée et de l'image de la figure d'interférence holographique.

Selon ce mode de réalisation, l'invention se base sur un capteur holographique mesurant la lumière ayant traversé l'échantillon à analyser et un capteur utilisant un procédé de diffraction de la lumière ayant traversé l'échantillon, et un traitement de l'information configuré afin de fusionner les images holographique et compressée et de détecter les particularités recherchées dans l'échantillon.

Un mode de réalisation en réflexion est également envisagé.

Selon un mode de réalisation, la présente invention utilise l'hologramme et l'image compressée d'une même scène hyperspectrale. Une méthode de fusion d'images par réseau de neurones profond et convolutif est présentée dans « Multimodal deep learning for robust rgb-d object recognition. In Intelligent Robots and Systems (IROS) », Eitel, A., Springenberg, J. T., Spinello, L., Riedmiller, M., and Burgard, W. (2015) IEEE/RSJ International Conférence on , pages 681#687. IEEE. Ce document présente une structure de réseau de neurones profond et convolutif utilisant deux chemins de traitement, un chemin par type d'image d'une même scène, complété par des couches fusionnant les deux chemins ; la fonction implémentée par ce réseau de neurones profond et convolutif est une classification des images. Cette structure n'est pas adaptée en l'état pour ce mode de réalisation de la présente invention, car non adaptée aux images compressées en deux dimensions d'une scène hyperspectrale en trois dimensions, et ayant pour fonction la classification de la scène et non la détection de particularités dans cette scène.

Ce mode de réalisation de l'invention permet de mesurer et analyser un échantillon depuis une image holographique acquise depuis une lumière traversant l'échantillon ; image contenant toute l'information spatiale et de phase ; et d'une image compressée, représentation compressée, non-homogène et non-linéaire en deux dimensions contenant toute l'information spatiale et spectrale de la lumière ayant traversé ledit échantillon au moyen d'un réseau de neurones convolutif fusionnant ces informations. Un mode de réalisation en réflexion est également envisagé.

L'invention trouve une application particulièrement avantageuse pour les systèmes destinés à analyser des échantillons en détectant des particularités à partir de leur forme, leur texture, leur phase et leur spectre de transmittance.

L'invention peut être appliquée à un grand nombre de domaines techniques dans lesquels une analyse microscopique holographique hyperspectrale est recherchée. De manière non exhaustive, l'invention peut être utilisée, par exemple, dans le domaine médical et dentaire, pour aider au diagnostic en détectant notamment la présence de bactéries, de cellules ou de molécules dans un échantillon. Dans le domaine de l'analyse chimique, l'invention peut tout autant être utilisée pour mesurer les concentrations. Dans le domaine de la biologie, l'invention peut être utilisée pour détecter la présence de bactéries, cellules, spores, ou molécules organiques.

Au sens de l'invention, une microscopie holographique hyperspectrale correspond à un dispositif détectant des particularités dans l'image d'un échantillon directement depuis un système optique acquérant un hologramme microscopique de l'échantillon, contenant les informations de phase et d'amplitude de l'image de l'échantillon et une acquisition d'une image compressée contenant les informations spatiales et spectrales de l'échantillon.

Selon un mode de réalisation, le dispositif d'illumination dudit échantillon comprend une source lumineuse collimatée et configurée de manière à générer un faisceau lumineux, le dispositif d'acquisition de ladite image diffractée et de ladite image des figures d'interférences holographique comporte :

- un premier miroir semi-réfléchissant séparant le faisceau lumineux issu de ladite source lumineuse en deux faisceaux lumineux ; un premier faisceau, faisceau objet, traversant l'échantillon et un second faisceau, faisceau référence, en direction d'un second miroir réfléchissant ; et
- le second miroir réfléchissant dirigeant ledit faisceau lumineux de référence en direction d'un troisième miroir semi-réfléchissant ; et
- le troisième miroir semi-réfléchissant, additionnant ledit faisceau référence avec ledit faisceau objet et transmis en direction d'un filtre chromatique ; et
- une zone dans laquelle ledit échantillon peut être positionné de manière à être traversé par ledit faisceau lumineux objet ; et
- un quatrième miroir semi-réfléchissant, séparant ledit faisceau objet issu de la zone dans laquelle ledit échantillon peut être positionné en deux faisceaux :un troisième faisceau étant transmis en direction du troisième miroir semi-réfléchissant et un quatrième faisceau étant transmis en direction d'une première lentille convergente ; et
- la première lentille convergente configurée pour imager ledit échantillon (éclairé par ledit faisceau objet) sur une ouverture ; et
- un collimateur configuré pour capter le faisceau traversant ladite ouverture et pour transmettre ce faisceau sur un réseau de diffraction ; et
- une seconde lentille convergente configurée pour focaliser les rayons issus du réseau de diffraction sur une surface de captation,
- le filtre chromatique configuré pour filtrer les longueurs d'ondes desdits faisceaux objet et référence, additionnés et interférés sous forme d'hologramme sur le troisième miroir semi-réfléchissant ; et
- une troisième lentille convergente configurée pour focaliser les rayons hologrammes issus du filtre chromatique sur une surface de captation.

Ce mode de réalisation est particulièrement simple à réaliser.

Selon un mode de réalisation, le dispositif d'acquisition comprend un dispositif d'acquisition unique d'une image compressée des figures d'interférences holographiques de l'échantillon.

Selon ce mode de réalisation, le dispositif d'illumination dudit échantillon comprend une source lumineuse collimatée et configurée de manière à générer un faisceau lumineux, et le dispositif d'acquisition comporte :

- un premier miroir semi-réfléchissant séparant le faisceau lumineux issu de ladite source lumineuse en deux faisceaux lumineux : un premier faisceau, faisceau objet, illuminant l'échantillon et un second faisceau, faisceau référence; et
- une zone dans laquelle ledit échantillon peut être positionné de manière à être imagé par ledit faisceau lumineux objet ; et
- un système de miroirs adaptés pour faire interférer les faisceaux objet et de référence,
- une première lentille convergente configurée pour imager ledit hologramme de l'échantillon sur une ouverture ; et
- un collimateur configuré pour capter le faisceau traversant ladite ouverture et pour transmettre ce faisceau sur un réseau de diffraction ; et
- une seconde lentille convergente configurée pour focaliser les rayons issus du réseau de diffraction sur une surface de captation.

Selon un mode de réalisation, ledit dispositif d'illumination est obtenu par une source lumineuse comportant :

- une première source de lumière blanche, multi-chromatique et non-cohérente ; et

- une première lentille convergente configurée pour collimater les rayons lumineux issus de ladite première source de lumière blanche, multi-chromatique et non-cohérente ; et
- une seconde source de lumière, mono-chromatique et cohérente ; et
- un système optique d'expansion du faisceau configuré pour étendre et collimater les rayons lumineux issus de ladite seconde source de lumière mono-chromatique et cohérente ; et
- une troisième lentille convergente configurée pour collimater les rayons lumineux issus de ladite seconde lentille divergente ; et
- un prisme configuré pour additionner les rayons lumineux issus de ladite source de lumière mono-chromatique et cohérente et les rayons lumineux issus de ladite source de lumière blanche, multi-chromatique et non-cohérente dans un faisceau lumineux.

Ce mode de réalisation est particulièrement simple à réaliser.

Selon un mode de réalisation, ladite figure d'interférences holographique est obtenue par un capteur infrarouge. Ce mode de réalisation permet d'obtenir une information invisible à l'œil humain.

Selon un mode de réalisation, ladite figure d'interférences holographique est obtenue par un capteur dont la longueur d'onde est comprise entre 300 nanomètres et 2000 nanomètres. Ce mode de réalisation permet d'obtenir une information dans le domaine visible et invisible à l'œil humain.

Selon un mode de réalisation, ladite image compressée est obtenue par un capteur infrarouge. Ce mode de réalisation permet d'obtenir une information invisible à l'œil humain.

Selon un mode de réalisation, ladite image compressée est obtenue par un capteur dont la longueur d'onde est comprise entre 300 nanomètre et 2000 nanomètres. Ce mode de réalisation permet d'obtenir une information dans le domaine visible et invisible à l'oeil humain.

Selon un mode de réalisation, ladite particularité recherchée dans ledit échantillon est la présence d'un genre et d'une espèce de bactérie dans un échantillon de salive, de prélèvement de tartre dentaire, de sécrétions nasales, de sang ou d'urine contenant un ensemble de bactéries de différents genres et différentes espèces. Ce mode de réalisation permet de détecter certaines bactéries indicatrices de maladies ou syndromes dans un objectif d'aide au diagnostic.

Selon un mode de réalisation, ladite particularité recherchée dans ledit échantillon est la présence d'une molécule ou d'un ensemble de molécules présentant une transmittance particulière dans le spectre lumineux concerné par l'analyse. Ce mode de réalisation permet de détecter certaines molécules indicatrices de maladies ou syndromes dans un objectif d'aide au diagnostic.

Selon un mode de réalisation, ladite particularité recherchée dans ledit échantillon est la présence de gamètes dans un échantillon de sperme. Ce mode de réalisation permet de dénombrer les gamètes présents dans un échantillon dans un objectif d'aide au diagnostic.

Selon un autre aspect, l'invention se rapporte à un procédé de mesure et d'analyse holographique et hyperspectrale d'un échantillon, ledit procédé comportant :

- un dispositif d'illumination illumine ledit échantillon; et

- un dispositif d'acquisition acquiert une image contenant les informations spectrale et d'amplitude du signal lumineux illuminant ledit échantillon ; et des figures d'interférences holographiques d'un faisceau lumineux de référence et d'un faisceau lumineux ayant illuminé ledit échantillon contenant les informations d'amplitude et de phase du signal lumineux illuminant ledit échantillon ; et

- un dispositif de reconstruction de l'image holographique hyperspectrale et d'analyse des propriétés d'amplitude, de phase et de spectre de la lumière illuminant ledit échantillon intègre un réseau de neurones profond et convolutif architecturé pour calculer une probabilité de présence de la ou les particularités recherchées dans ledit échantillon depuis l'image holographique hyperspectrale, et générer une image pour chaque particularité recherchée dont la valeur de chaque pixel aux cordonnées *x* et *y* correspond à la probabilité de présence de ladite particularité aux mêmes coordonnées *x et y* dudit échantillon

Selon un autre aspect, l'invention se rapporte à un programme d'ordinateur comprenant des instructions qui conduisent un processeur à exécuter un tel procédé.

En ce qui concerne la détection de particularités depuis lesdites images holographique et compressée, l'invention utilise un réseau de neurones profond et convolutif de détermination des probabilités de présence de ces particularités. Un apprentissage dudit réseau de neurones profond et convolutif permet d'indiquer la probabilité de présence des particularités recherchées pour chaque coordonnées *x* et *y* de l'image dudit échantillon. Par exemple, un apprentissage par rétro-propagation du gradient ou ses dérivés à partir de données d'apprentissage peut être utilisé.

Le réseau de neurones profond et convolutif servant à la détection directe depuis ladite image holographique et ladite image compressée a une structure de couche d'entrée adaptée à la détection directe. L'invention dispose de plusieurs architectures des couches profondes dudit réseau de neurones. Parmi celle-ci, une architecture auto-encodeur telle que décrite dans le document « SegNet: A Deep Convolutional Encoder-Decoder Architecture for Image Segmentation », Vijay Badrinarayanan, Alex Kendall, Roberto Cipolla permet d'indiquer la probabilité de présence des particularités recherchées pour chaque coordonnées *x* et *y* de l'image dudit l'échantillon. Par ailleurs, le document « Multimodal deep leaming for robust rgb-d object recognition. In Intelligent Robots and Systems (IROS) », Eitel, A., Springenberg, J. T., Spinello, L., Riedmiller, M., and Burgard, W. (2015) IEEE/RSJ International Conférence on , pages 681#687. IEEE, décrit une architecture de réseau de neurones convolutif adapté au traitement de différentes images d'une même scène.

Lesdites couches d'entrées du réseau de neurones sont adaptées afin d'être remplies avec les données de ladite image holographique et ladite image compressée obtenues par le dispositif d'acquisition. Ainsi, chaque couche d'entrée des différents chemins de traitement des images est un tenseur d'ordre trois et possède deux dimensions spatiales de taille $X_{MAX}$ et $Y_{MAX}$, et une dimension de profondeur de taille $D_{MAX}$.

L'invention utilise la relation non linéaire $f(x_t, y_t, d_t)$ ---> $(x_{img}, y_{img})$ définie pour $x_t \in [0..X_{MAX}[$, $y_t \in [0..Y_{MAX}[$ et $d_t \in [0..D_{MAX}[$ permettant de calculer les coordonnées $x_{img}$ et $y_{img}$ du pixel de ladite au moins une image compressée dont l'intensité est copiée dans le tenseur d'ordre trois de ladite couche d'entrée du chemin de traitement des images compressées du réseau de neurones aux coordonnées $(x_t, y_t, d_t)$.

Le dispositif d'acquisition acquière ladite image compressée contenant les diffractions de l'image dudit échantillon obtenue avec des filtres de diffraction. Ladite image diffractée obtenue contient l'image de la scène de l'échantillon non diffractée au centre, ainsi que les projections diffractées suivant les axes des différents filtres de diffractions. Une couche d'entrée du réseau de neurones contient une copie des huit représentations chromatiques de la scène hyperspectrale de l'échantillon de l'image diffractée selon la relation non-linéaire suivante :

$$f(x_t, y_t, d_t) = \begin{Bmatrix} x_{img} = x + x_{offsetX}(n) + \lambda.\lambda_{sliceX} \\ y_{img} = y + y_{offsetY}(n) + \lambda.\lambda_{sliceY} \end{Bmatrix}$$

avec :

$f(x_t, y_t, d_t)$ fonction calculant la valeur de la couche d'entrée à la position $x_t, y_t, d_t$ ;

$$n = floor(d_t/d_{MAX})\ ;$$

$$\lambda = d_t mod(d_{MAX}/7)\ ;$$

*n* compris entre 0 et 7, le nombre de diffractions de l'image compressée ;
$d_t$ compris entre 0 et $D_{MAX}$ ;
$x_t$ compris entre 0 et $X_{MAX}$ ;
$y_t$ compris entre 0 et $Y_{MAX}$ ;
$D_{MAX}$, la constante de profondeur du tenseur du troisième ordre de ladite couche d'entrée ;
$\lambda_{sliceX}$, la constante du pas spectral du pixel en X de ladite image compressée ;
$\lambda_{sliceY}$, la constante du pas spectral du pixel en Y de ladite image compressée ;
$x_{offsetX}(n)$ correspondant au décalage suivant l'axe X de la diffraction *n* ;
$y_{offsetY}(n)$ correspondant au décalage suivant l'axe Y de la diffraction *n.*

L'architecture du réseau de neurones profond et convolutif est composée d'un encodeur pour ladite image holographique et d'un encodeur pour ladite image compressée ; chacun des encodeurs permettant de rechercher les caractéristiques élémentaires propres à la détection souhaitée ; suivi d'un décodeur permettant de fusionner les caractéristiques élémentaires propres de chacune des images traitées par les encodeurs et de générer une image de probabilités de présence des caractéristiques à détecter dans l'échantillon. La structure d'encodeurs/décodeur permet de rechercher les caractéristiques élémentaires et propres à la caractéristique principale recherchée dans l'image dudit échantillon.

Chaque encodeur est composé d'une succession de couches de neurones de convolution en alternance avec des couches de pooling (opérateur de décimation de la couche précédente) permettant de réduire la dimension spatiale.

Le décodeur est composé d'une succession de couches de neurones de déconvolution en alternance avec des couches d'unpooling (opération d'interpolation de la couche précédente) permettant une augmentation de la dimension spatiale.

Par exemple, une telle structure d'encodeur/décodeur est décrite dans « *SegNet: A Deep Convolutional Encoder-Decoder Architecture for Image Segmentation* », Vijay Badrinarayanan, Alex Kendall, Roberto Cipolla.

Par exemple, une telle structure d'encodeurs fusionnant différentes images d'une même scène est décrite dans « Multimodal deep learning for robust rgb-d object recognition. In Intelligent Robots and Systems (IROS) », Eitel, A., Springenberg, J. T., Spinello, L., Riedmiller, M., and Burgard, W. (2015) IEEE/RSJ International Conférence on , pages 681#687. IEEE.

Un ensemble de couches de neurones entièrement connectées peut être positionné entre l'encodeur et le décodeur.

## DESCRIPTION SOMMAIRE DES FIGURES

La manière de réaliser l'invention ainsi que les avantages qui en découlent, ressortiront bien du mode de réalisation qui suit, donné à titre indicatif mais non limitatif, à l'appui des figures annexées dans lesquelles les figures 1 à 11 représentent :

[Fig. 1] : une représentation schématique de face des éléments d'un dispositif de microscopie holographique hyperspectrale selon un mode de réalisation de l'invention ;
[Fig. 2] : une représentation schématique structurelle des éléments du dispositif de la Fig. 1 ;
[Fig. 3] : une représentation schématique de l'optique du dispositif de la Fig.2 ;
[Fig. 4] : une représentation schématique de l'architecture du réseau de neurones de la Fig. 2.
[Fig. 5] : une représentation schématique de la connexion des premières couches du réseau de neurones de la Fig. 2 ;
[Fig. 6] : une représentation schématique de la source lumineuse de la Fig.2.
Les figures 7 à 11 sont des représentations schématiques similaires à la figure 3 pour d'autres mode de réalisation de montage optique.

## MANIERE DE DECRIRE L'INVENTION

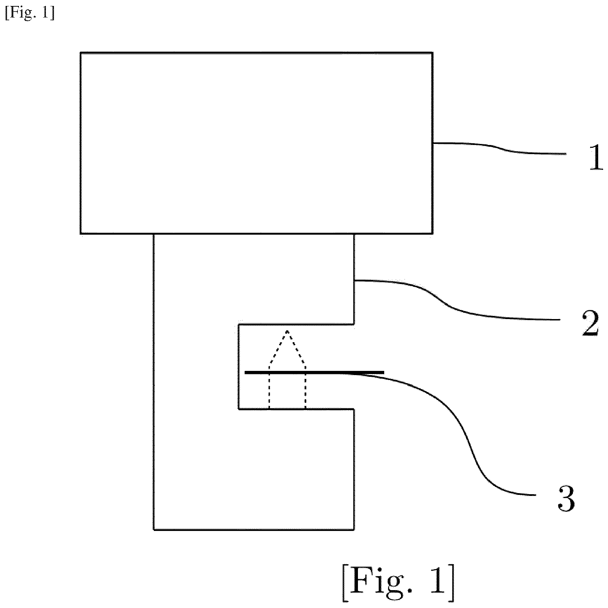

La Fig. 1 illustre un dispositif de capture **2** de la lumière traversant un échantillon **3,** ledit dispositif de capture **2** comportant une optique de mesure, un capteur holographique permettant d'obtenir un hologramme de l'échantillon **3** et un capteur permettant d'obtenir une image compressée de la lumière traversant l'échantillon **3.** Dans ce mode de réalisation, on désigne donc par l'appellation « image holographique hyperspectrale » une image comprenant la juxtaposition spatiale d'une image compressée comprenant l'information hyperspectrale et d'une image d'un hologramme. Le dispositif de capture **2** transmet les images obtenues à un dispositif de traitement **1** fusionnant les informations contenues dans l'hologramme de l'échantillon **3** et l'image compressée de la lumière traversant l'échantillon **3** afin de détecter des particularités dans l'échantillon **3.**

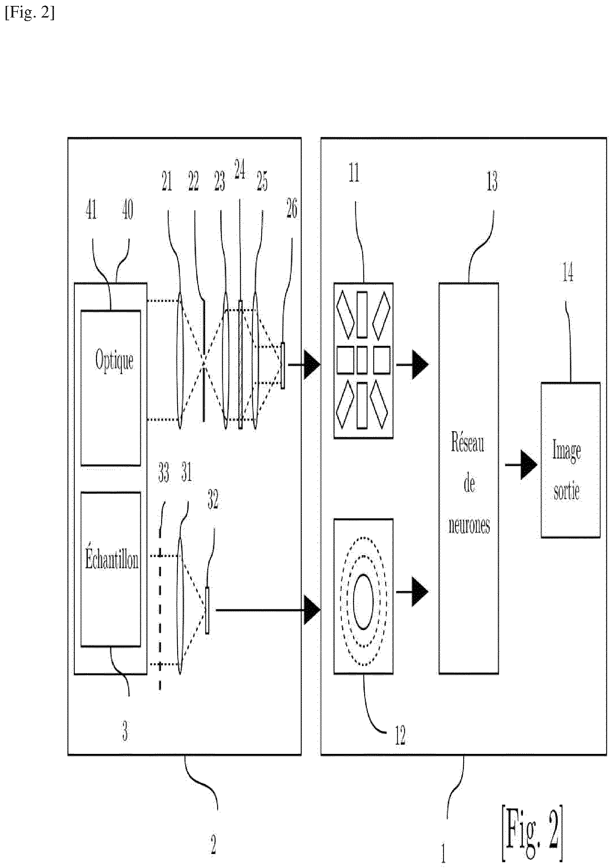

Tel qu'illustré sur la Fig. 2, le dispositif de capture **2** comporte un dispositif d'acquisition d'une image compressée de la lumière traversant l'échantillon **3,** qui comporte une première lentille convergente **21** qui focalise l'image de l'échantillon **3** sur une ouverture **22.** Un collimateur **23** capte les rayons traversant l'ouverture **22** et transmet ces rayons à un réseau de diffraction **24.** Une seconde lentille convergente **25** focalise ces rayons issus du réseau de diffraction **24** sur une surface de captation **26.**

La structure de cet assemblage optique est relativement similaire à celle décrite dans la publication scientifique « Computed-tomography imaging spectrometer : experimental calibration and reconstruction results », publiée dans APPLIED OPTICS, volume 34 (1995) nombre 22.

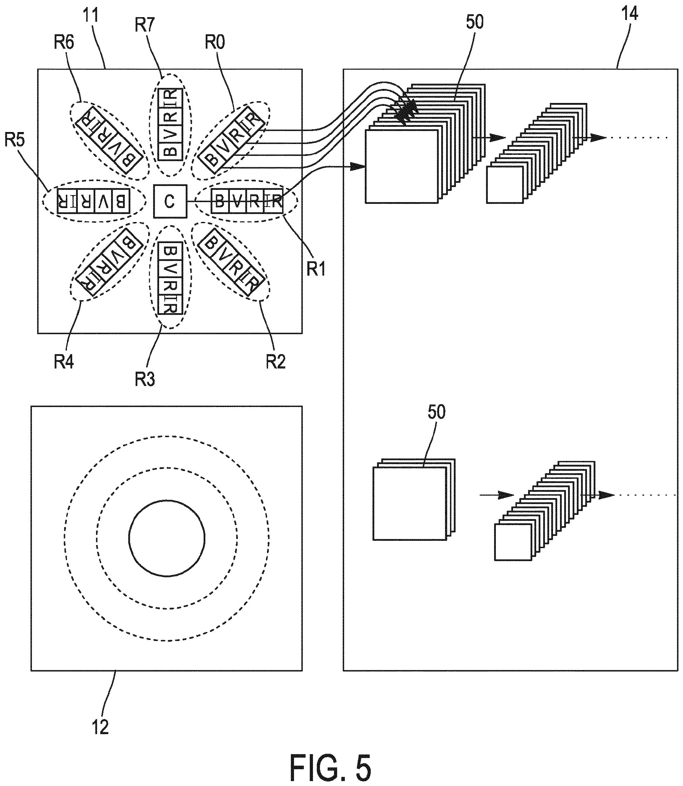

Cette structure optique permet d'obtenir une image compressée **11,** illustrée sur la Fig. 5, présentant plusieurs diffractions **R0-R7** de l'image de l'échantillon **3** disposées autour d'une image non diffractée de petite taille **C.** Dans l'exemple de la Fig. 5, l'image compressée présente huit diffractions **R0-R7** distinctes obtenues avec deux axes de diffraction du réseau de diffraction **24.**

En variante, trois axes de diffractions peuvent être utilisés sur le réseau de diffraction **24** de sorte à obtenir une image diffractée **11** avec seize diffractions.

Tel qu'illustré sur la Fig. 2, le dispositif de capture **2** comporte un dispositif d'acquisition d'une image holographique de l'échantillon **3,** qui comporte une lentille convergente **31** qui focalise l'hologramme de l'échantillon **3** sur une surface de captation **32.**

Cette structure permet d'obtenir une image holographique **12,** illustrée sur la Fig. 5, contenant l'hologramme de l'échantillon **3.**

Le dispositif de traitement **1** comporte un réseau de neurones **13** fusionnant les informations contenues dans les images **11** et **12** et génère une image **14** dont chaque pixel aux coordonnées *x* et *y* indique la probabilité de présence de la particularité recherchée dans l'échantillon **3** aux mêmes coordonnées *x et y* du plan de l'échantillon **3.**

En variante, le dispositif de traitement **1** comporte un réseau de neurones **13** configuré pour fusionner les informations contenues dans les images **11** et **12** et génère une image **14** représentant l'échantillon tel qu'il serait vu par un microscope standard.

Ainsi, selon un aspect indépendant, une invention se rapporte à un dispositif de mesure d'un échantillon, ledit dispositif comportant :

- un dispositif d'acquisition 2 d'une image compressée 11 de l'échantillon 3 contenant les informations spectrale et d'amplitude du signal lumineux illuminant ledit échantillon 3 et des figures d'interférences holographiques 12 d'un faisceau lumineux de référence R et d'un faisceau lumineux O ayant illuminé ledit échantillon 3 contenant les informations d'amplitude et de phase du signal lumineux illuminant ledit échantillon ; et

- un dispositif d'illumination 34 dudit échantillon 3 ; et

- un dispositif de reconstruction d'une image de microscopie de l'échantillon intégrant un réseau de neurones profond et convolutif 13 architecturé pour calculer une intensité lumineuse dans ledit échantillon 3 depuis l'image compressée 11 et la figure d'interférence holographique 12 du faisceau de référence R avec le faisceau illuminant O l'échantillon 3, et générant une image dont la valeur de chaque pixel aux cordonnées u et v correspond à l'intensité lumineuse aux coordonnées x et y du plan dudit échantillon 3 ; ledit réseau de neurones profond et convolutif 13 étant architecturé de façon à fusionner les informations des capteurs de l'image diffractée 11 et de l'image de la figure d'interférence holographique 12.

Le réseau de neurones est configuré pour reconstruire l'image microscopique à partir des détections effectuées.

L'image (u ;v) est agrandie par rapport à la zone (x ;y) du plan de l'échantillon imagée.

Cet aspect en soi apparaissant innovant, la demanderesse se réserve le droit de le protéger en soi, de manière indépendante, par tout moyen approprié à partir de la présente demande de brevet.

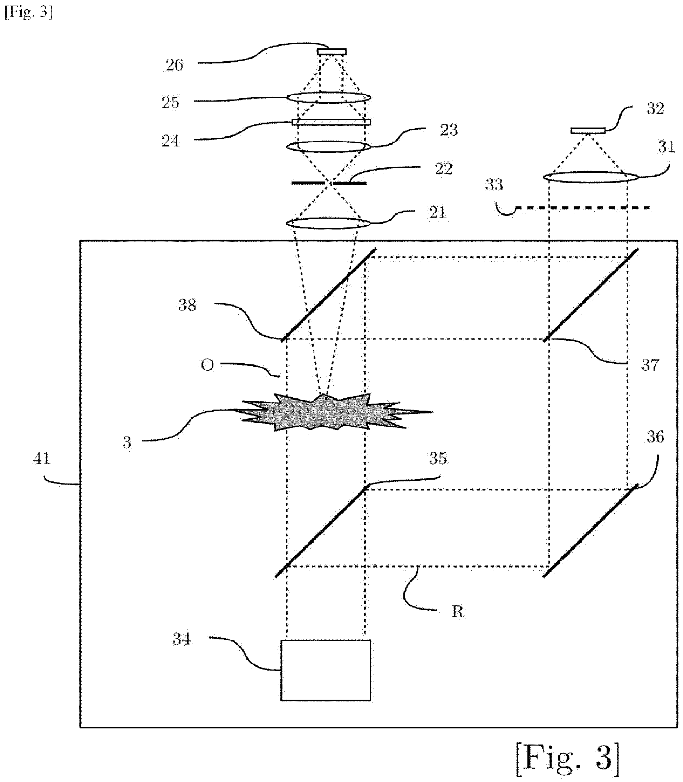

Le dispositif optique **41** comporte, tel qu'illustré sur la Fig. 3, les éléments suivants :

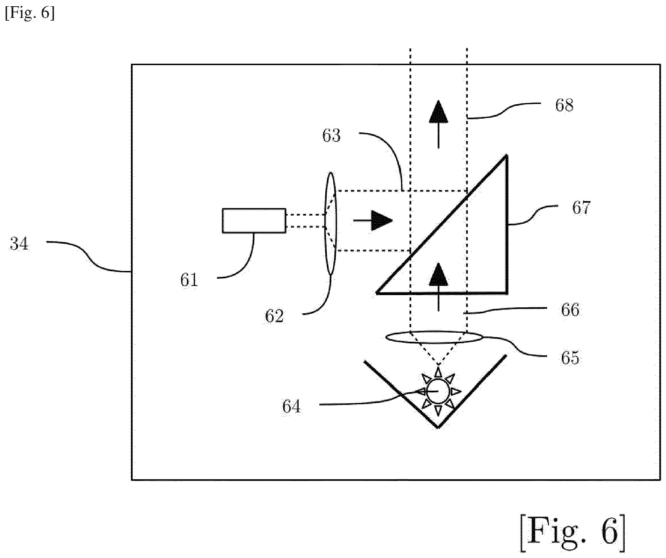

- une source lumineuse, tel qu'illustré sur la Fig. 6, configurée de manière à générer un faisceau lumineux comportant une lumière blanche, multi-chromatique et non-cohérente **64** et un faisceau lumineux mono-chromatique et cohérent **61** transmis à travers ledit échantillon **3** ; et
- un chemin optique configuré de manière à générer un faisceau lumineux de référence **R** comportant le miroir semi-réfléchissant **35** et le miroir réfléchissant **36** ; et
- une zone permettant au faisceau issu du premier miroir semi-réfléchissant **35** de traverser ledit échantillon **3** de manière à générer un faisceau objet **O** contenant la lumière ayant traversé l'échantillon **3** ; et
- un miroir semi-réfléchissant **38** configuré de manière à transmettre ledit faisceau lumineux objet **O** en direction du dispositif d'acquisition de l'image diffractée dont le premier élément est la lentille convergente **21** et en direction du miroir semi-réfléchissant **37** configuré de manière à faire interférer lesdits faisceaux lumineux objet **O** et de référence **R** ; les figures d'interférences générées sur le miroir semi-réfléchissant **37** sont l'hologramme dudit échantillon **3** ; - un miroir semi-réfléchissant **37** générant l'hologramme dudit échantillon **3** et transmettant ledit hologramme en direction du dispositif d'acquisition holographique dont le premier élément est le filtre chromatique **33** conservant les longueurs d'onde du faisceau lumineux mono-chromatique.

Le faisceau lumineux comportant une lumière blanche, multi-chromatique et non-cohérente est émis par une source de lumière blanche, multi-chromatique et non-cohérente 64 et le faisceau lumineux mono-chromatique et cohérent est émis par une source de faisceau lumineux mono-chromatique et cohérent 61.

Le boîtier optique 40 est obtenu en plaçant l'échantillon 3 dans la zone dédiée du dispositif optique 41.

Les surfaces de captation **26,** et **32** peuvent correspondre à un capteur CCD (pour *« charge-coupled device »* dans la littérature anglo-saxonne, c'est-à-dire un dispositif à transfert de charge), à un capteur CMOS (pour « *complementary metal-oxide-semiconductor* » dans la littérature anglo-saxonne, une technologie de fabrication de composants électroniques), ou à tout autre capteur connus. Par exemple, la publication scientifique « Practical Spectral Photography », publiée dans Eurographics, volume 31 (2012) nombre 2, propose d'associer la structure optique de diffraction à un appareil photo numérique standard pour capter l'image compressée.

De préférence, chaque pixel des images compressée **11,** et holographique **12,** est codé sur trois couleurs rouge, vert et bleu et sur 8 bits permettant ainsi de représenter 256 niveaux sur chaque couleur.

En variante, les surfaces de captation **26,** ou **32** peuvent être un dispositif dont les longueurs d'ondes captées ne sont pas dans la partie visible. Par exemple, le dispositif **2** peut intégrer des capteurs dont la longueur d'onde est comprise entre 300 nanomètres et 2000 nanomètres.

Lorsque les images compressée **11,** et holographique **12** de l'échantillon **3** observé sont obtenues, le moyen de détection met en oeuvre un réseau de neurones **13** pour détecter une particularité dans la scène observée à partir des informations des images compressée **11,** et holographique **12.**

Ce réseau de neurones **13** vise à déterminer la probabilité de présence de la particularité recherchée pour chaque pixel localisé aux coordonnées *x* et *y* de la scène hyperspectrale **3** observée.

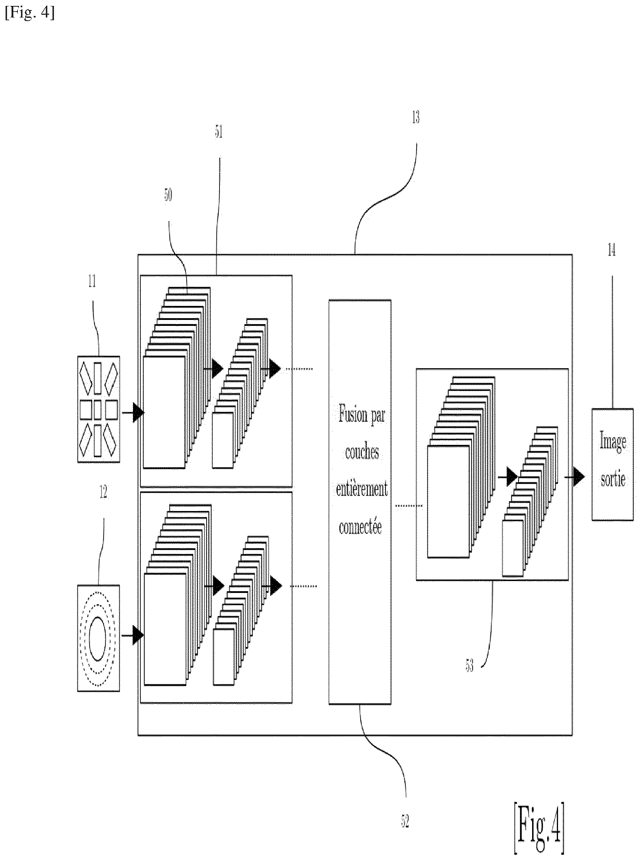

Pour ce faire, tel qu'illustré sur la Fig. 4, le réseau de neurones **13** comporte un encodeur **51** pour l'image compressée et un encodeur **51** pour l'image holographique ; chaque encodeur possède une couche d'entrée **50,** apte à extraire les informations de l'image **11,** ou **12.** Le réseau de neurones fusionne les informations provenant des deux encodeurs **51** au moyen de couches de convolution ou de couches entièrement connectées. Un décodeur **53** et sa couche de sortie, apte à traiter ces informations de sorte à générer une image **14** dont l'intensité de chaque pixel à la coordonnée *x* et *y,* correspond à la probabilité de présence de la particularité aux coordonnées *x et y* de l'échantillon **3,** est inséré suite à la fusion des informations.

Tel qu'illustré sur la Fig. 5, lesdites couches d'entrée 50 des encodeurs 51 du réseau de neurones 13 sont remplies avec les informations provenant de ladite image compressée 11 et ladite image holographique 12.

La couche d'entrée 50 de l'encodeur 51 traitant les informations de ladite image holographique 12 est remplie avec une copie de ladite image holographique 12 dont chaque pixel est mis à niveau au moyen d'une multiplication par une constante permettant à chaque pixel d'être dans la gamme [0..1].

La couche d'entrée 50 de l'encodeur 51 traitant les informations de ladite image compressée 11 est remplie selon la relation non-linéaire suivante :

$$f(x_t, y_t, d_t) = \begin{Bmatrix} x_{img} = x + x_{offsetX}(n) + \lambda.\lambda_{sliceX} \\ y_{img} = y + y_{offsetY}(n) + \lambda.\lambda_{sliceY} \end{Bmatrix}$$

avec :

$f(x_t,y_t,d_t)$fonction calculant la valeur de la couche d'entrée à la position $x_t,y_t,d_t$ ;

$$n = floor(d_t/d_{MAX})\,;$$

$$\lambda = d_t mod \frac{d_{MAX}}{7}\,;$$

$n$ compris entre 0 et 7, le nombre de diffractions de l'image compressée ;
$d_t$ compris entre 0 et $D_{MAX}$ ;
$x_t$ compris entre 0 et $X_{MAX}$ ;
$y_t$ compris entre 0 et $Y_{MAX}$ ;
$D_{MAX}$, la constante de profondeur du tenseur du troisième ordre de ladite couche d'entrée ;
$\lambda_{sliceX}$, la constante du pas spectral du pixel en X de ladite image compressée ;
$\lambda_{sliceY}$, la constante du pas spectral du pixel en Y de ladite image compressée ;
$x_{offsetX}$ ($n$)correspondant au décalage suivant l'axe X de la diffraction $n$ ;
$y_{offsetY}$ ($n$)correspondant au décalage suivant l'axe Y de la diffraction $n$.

Floor est un opérateur de troncature bien connu.

Mod désigne l'opérateur « module ».

L'architecture dudit réseau de neurones **13** est composée d'un ensemble de couches convolutives telles que la couche **50** assemblée linéairement et en alternance avec des couches de décimation (pooling), ou d'interpolation (unpooling).

Une couche convolutive de profondeur *d,* noté *CONV(d),* est définie par *d* noyaux de convolution, chacun de ces noyaux de convolution étant appliqué au volume du tenseur d'entrée d'ordre trois et de taille $x_{input}, y_{input}, d_{input}$. La couche convolutive génère ainsi un volume de sortie, tenseur d'ordre trois, ayant une profondeur *d.* Une fonction d'activation *ACT* est appliquée sur les valeurs calculées du volume de sortie.

Les paramètres de chaque noyau de convolution d'une couche convolutive sont spécifiés par la procédure d'apprentissage du réseau de neurones.

Différentes fonctions d'activation *ACT* peuvent être utilisées. Par exemple, cette fonction peut être une fonction ReLu, définie par l'équation suivante :

$$ReLu(x) = max(0, x)$$

Une couche de décimation permet de réduire la largeur et la hauteur du tenseur d'ordre trois en entrée pour chaque profondeur dudit tenseur d'ordre trois. Par exemple, une couche de décimation *MaxPool(2,2)* sélectionne la valeur maximale d'une tuile glissante sur la surface de 2x2 valeurs. Cette opération est appliquée sur l'ensemble des profondeurs du tenseur d'entrée et génère un tenseur de sortie ayant la même profondeur et une largeur divisée par deux, ainsi qu'une hauteur divisée par deux.

Une architecture de réseau de neurones permettant la détection directe de particularités dans la scène hyperspectrale peut être la suivante :

| Input1 | Input2 |
|---|---|
| ⇒ CONV(64) | ⇒ CONV(64) |
| ⇒ MaxPool(2,2) | ⇒ MaxPool(2,2) |
| ⇒ CONV(64) | ⇒ CONV(64) |
| ⇒ MaxPool(2,2) | ⇒ MaxPool(2,2) |

⇒ CONV(64)
⇒ CONV(64)
⇒ MaxUnpool(2,2)
⇒ CONV(64)
⇒ MaxUnpool(2,2)
⇒ CONV(64)
⇒ MaxUnpool(2,2)
⇒ CONV(1)
⇒ Output

En variante, le nombre de couches de convolution CONV(d) et de décimation MaxPool(2,2) peut être modifié afin de faciliter la détection de particularités ayant une complexité sémantique supérieure. Par exemple, un nombre plus élevé de couches de convolution permet de traiter des signatures plus complexes de forme, de texture, ou spectrales de la particularité recherchée dans la scène hyperspectrale.

En variante, le nombre de couches de déconvolution CONV(d) et d'interpolation MaxUnpool(2, 2) peut être modifié afin de faciliter la reconstruction de la couche de sortie. Par exemple, un nombre plus élevé de couches de déconvolution permet de reconstruire une sortie avec une précision plus importante.

En variante, les couches de convolution CONV(64), peuvent avoir une profondeur différente de 64 afin de traiter un nombre de particularités locales différent. Par exemple, une profondeur de 128 permet de traiter localement 128 particularités différentes dans une scène hyperspectrale complexe.

En variante, les couches d'interpolation MaxUnpool(2, 2) peuvent être de dimension d'interpolation différente. Par exemple, une couche MaxUnpool (4, 4) permet d'augmenter la dimension de traitement de la couche supérieure.

En variante, les couches d'activation ACT de type ReLu(x) insérées suite à chaque convolution et déconvolution, peuvent être de type différent. Par exemple, la fonction softplus définie par l'équation : $f(x) = log(1 + e^x)$peut être utilisée.

En variante, les couches de décimation MaxPool(2, 2) peuvent être de dimension de décimation différente. Par exemple, une couche MaxPool(4, 4) permet de réduire la dimension spatiale plus rapidement et de concentrer la recherche sémantique du réseau de neurones sur les particularités locales.

En variante, des couches entièrement connectées peuvent être insérées entre les deux couches de convolution centrale à la ligne 6 de la description afin de traiter la détection dans un espace mathématique plus élevé. Par exemple, trois couches entièrement connectées de taille 128 peuvent être insérées.

En variante, les dimensions des couches de convolution CONV(64), de décimation MaxPool(2, 2), et d'interpolation MaxUnpool(2, 2) peuvent être ajustées sur une ou plusieurs couches, afin d'adapter l'architecture du réseau de neurones au plus proche du type de particularités recherchées dans la scène hyperspectrale.

Les poids dudit réseau de neurones 12 sont calculés au moyen d'un apprentissage. Par exemple, un apprentissage par rétro-propagation du gradient ou ses dérivés à partir de données d'apprentissage peut être utilisé pour calculer ces poids.

En variante, le réseau de neurones 12 peut déterminer la probabilité de présence de plusieurs particularités distinctes au sein de la même scène observée. Dans ce cas, la dernière couche convolutive aura une profondeur correspondant au nombre de particularités distinctes à détecter. Ainsi la couche convolutive CONV(1) est remplacée par une couche convolutive CONV(u), où u correspond au nombre de particularités distinctes à détecter.

En variante, des couches de normalisation, par exemple de type BatchNorm ou GroupNorm, tel que décrit dans « Batch Normalization: Accelerating Deep Network Training by Reducing Internai Covariate Shift », Sergey Ioffe, Christian Szegedy, Février 2015 et « Group Normalization », Yuxin Wu, Kaiming He, FAIR, Juin 2018 , peuvent être insérées avant ou après chaque couche d'activation ou à différents niveaux de la structure du réseau neuronal.

Les poids dudit réseau de neurones **13** sont calculés au moyen d'un apprentissage. Par exemple, un apprentissage par rétro-propagation du gradient ou ses dérivés à partir de données d'apprentissage peut être utilisé pour calculer ces poids.

En variante, le réseau de neurones **13** peut déterminer la probabilité de présence de plusieurs particularités distinctes au sein de la même scène observée. Dans ce cas, la dernière couche convolutive aura une profondeur correspondant au nombre de particularités distinctes à détecter. Ainsi la couche convolutive *CONV(1)* est remplacée par une couche convolutive *CONV(u),* où *u* correspond au nombre de particularités distinctes à détecter.

Tel qu'illustré sur la Fig. 6, le moyen d'illumination **34** de l'échantillon 3 est obtenu par un dispositif comportant :

- une première source de lumière blanche, multi-chromatique et non-cohérente **64 ;** et
- une première lentille convergente **65** configurée pour collimater les rayons lumineux issus de ladite source de lumière blanche, multi-chromatique et non-cohérente **64 ;** et
- une seconde source de lumière, mono-chromatique et cohérente **61** ; et
- un système optique **62** d'expansion du faisceau configuré pour étendre et collimater les rayons lumineux issus de ladite source de lumière mono-chromatique et cohérente **61** (ce système optique d'expansion comprend par exemple, le long du trajet optique, une deuxième lentille divergente puis une troisième lentille convergente collimatant le faisceau issu de la deuxième lentille divergente) ; et
- un prisme **67** configuré pour additionner les rayons lumineux **63** issus de ladite source de lumière mono-chromatique et cohérente **61** et les rayons lumineux **66** issus de ladite source de lumière blanche, multi-chromatique et non-cohérente **64** dans un rayon lumineux **68** dirigé vers l'échantillon **3.**

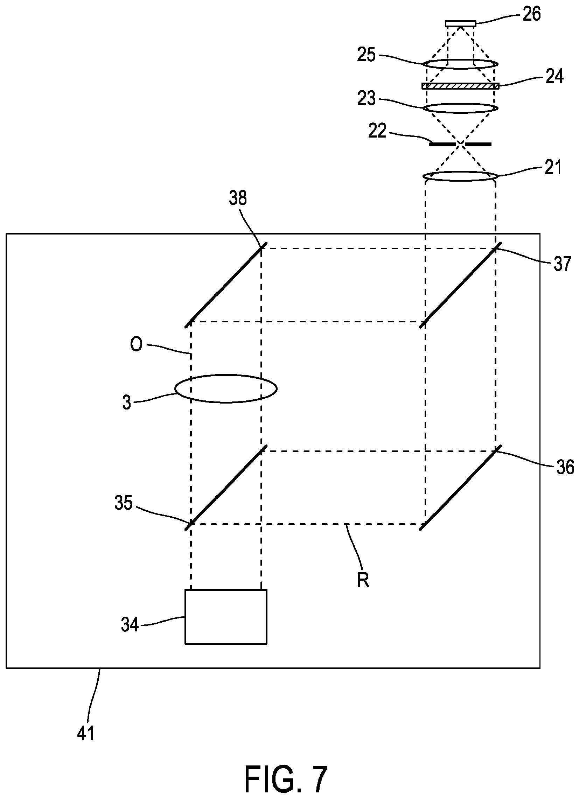

La figure 7 représente schématiquement le montage optique d'un autre mode de réalisation de l'invention. Une des particularités du mode de réalisation de la figure 7 est que la fusion entre la diffraction et l'hologramme se fait de manière optique plutôt que par le réseau de neurones. Le montage optique présenté à la figure 7 permet donc d'obtenir une image compressée de l'hologramme. Par conséquent, dans ce mode de réalisation, par l'expression « image holographique hyperspectrale », on désigne une image compressée (comprenant une diffraction) d'une image holographique de l'échantillon.

Plus précisément, le dispositif optique représenté sur la figure 7 comprend les éléments suivants :

- une source lumineuse 34 ;
- un chemin optique configuré de manière à générer un faisceau lumineux de référence **R** comportant un miroir semi-réfléchissant **35,** et le miroir réfléchissant **36 ;** et
- une zone permettant au faisceau issu du premier miroir semi-réfléchissant **35** de traverser ledit échantillon **3** de manière à générer un faisceau objet **O** contenant la lumière ayant traversé l'échantillon **3,** et le miroir réfléchissant **38** ; et
- un miroir semi-réfléchissant **37** générant l'hologramme dudit échantillon **3** en additionnant le faisceau de référence issu du miroir réfléchissant 36 et le faisceau objet issu du miroir réfléchissant 38, et transmettant ledit hologramme en direction du dispositif d'acquisition ; et
- le dispositif d'acquisition qui comporte une première lentille convergente **21** qui focalise l'image holographique de l'échantillon **3** sur une ouverture **22,** un collimateur **23** capte les rayons traversant l'ouverture **22** et transmet ces rayons à un réseau de diffraction **24,** une seconde lentille convergente **25** qui focalise ces rayons issus du réseau de diffraction **24** sur la surface de captation **26.**

Ainsi, plus précisément, le mélange optique réalisé sur le miroir 37 comprend à la fois l'interférence entre la composante mono-chromatique cohérente du faisceau objet et du faisceau de référence, mais aussi au moins l'intégralité du faisceau transmis à travers l'échantillon. C'est ce signal tout entier qui est soumis à la diffraction. Le réseau de neurones est configuré pour récupérer dans l'image acquise les parties du signal lui permettant de mesurer la particularité recherchée. Une étape intermédiaire mise en oeuvre par le réseau de neurones peut être de scinder une partie du signal correspondant à l'hologramme des parties de signal correspondant à la diffraction. Toutefois, la configuration du réseau de neurones ne va pas nécessairement mettre en oeuvre une telle séparation.

La couche d'entrée du réseau de neurones de ce mode de réalisation peut être peuplée comme la couche d'entrée du réseau de neurones du premier mode de réalisation peuplée avec l'image compressée.

Une architecture de réseau de neurones permettant la détection directe de particularités dans la scène hyperspectrale peut être la suivante :

Input
⇒ CONV(64)
⇒MaxPool(2,2)
⇒ CONV(64)
⇒MaxPool(2,2)
⇒ CONV(64)
⇒ CONV(64)
⇒ MaxUnpool(2,2)
⇒CONV(64)
⇒ MaxUnpool(2,2)
⇒CONV(64)
⇒ MaxUnpool(2,2)
⇒CONV(1)
⇒Output

Les variantes de réseaux de neurones présentées ci-dessus s'appliquent également à ce mode de réalisation.

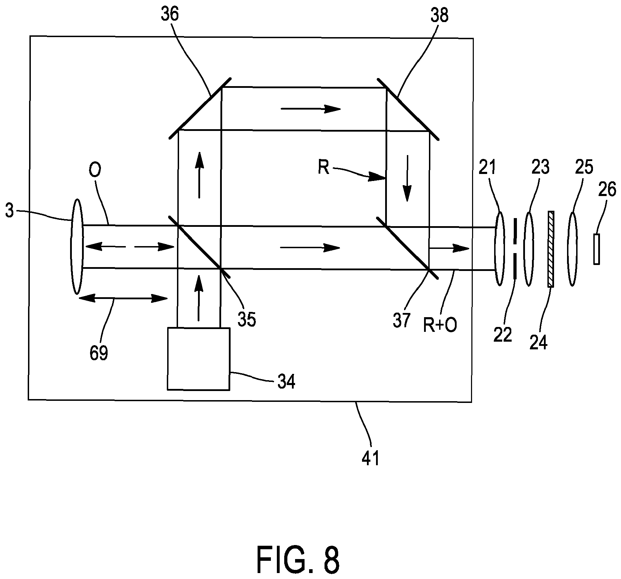

La figure 8 présente schématiquement le montage optique d'un autre mode de réalisation de l'invention. Tout comme dans le mode de réalisation de la figure 7, dans le mode de réalisation de la figure 8, la fusion entre la diffraction et l'hologramme se fait de manière optique plutôt que par le réseau de neurones. Le montage optique présenté à la figure 8 permet donc d'obtenir une image compressée de l'hologramme. Une des particularités du mode de réalisation de la figure 8 est que l'hologramme est réalisé en réflexion plutôt qu'en transmission.

Plus précisément, le dispositif optique représenté sur la figure 8 comprend les éléments suivants :

- une source lumineuse 34 ;
- un chemin optique configuré de manière à générer un faisceau lumineux de référence **R** comportant un miroir semi-réfléchissant **35,** et les miroirs réfléchissant **36** et **38 ;** et
- une zone permettant à un faisceau issu du premier miroir semi-réfléchissant **35** d'être réfléchi par ledit échantillon **3** de manière à générer un faisceau objet **O** contenant la lumière réfléchie par l'échantillon **3,** et le miroir semi-réfléchissant **37** ; et
- un miroir semi-réfléchissant **37** générant l'hologramme dudit échantillon **3** en additionnant le faisceau de référence issu du miroir réfléchissant **38** et le faisceau objet, et transmettant ledit hologramme en direction du dispositif d'acquisition ; et
- le dispositif d'acquisition qui comporte une première lentille convergente **21** qui focalise l'image holographique de l'échantillon **3** sur une ouverture **22,** un collimateur **23** capte les rayons traversant l'ouverture **22** et transmet ces rayons à un réseau de diffraction **24,** une seconde lentille convergente **25** qui focalise ces rayons issus du réseau de diffraction **24** sur la surface de captation **26.**

Le réseau de neurones associé peut avoir la même architecture que présenté ci-dessus, le fait que l'acquisition se fasse par réflexion plutôt que par transmission se traduisant au niveau des paramètres du réseau de neurones.

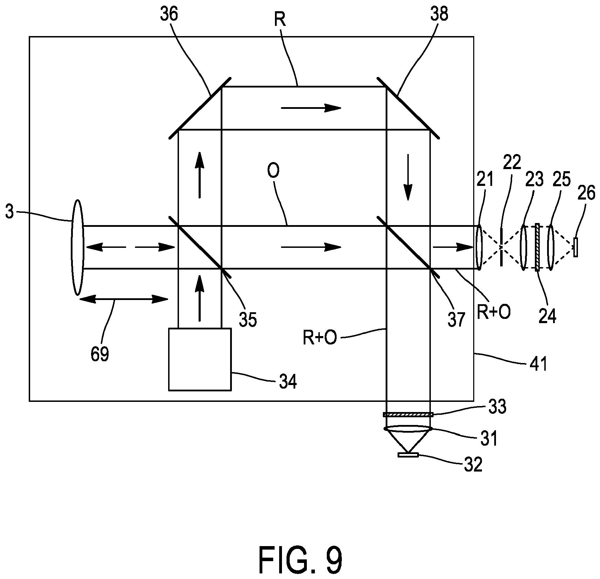

La figure 9 présente schématiquement le montage optique d'un autre mode de réalisation de l'invention. Tout comme dans le mode de réalisation de la figure 3, dans le mode de réalisation de la figure 9, la fusion entre la diffraction et l'hologramme se fait par le réseau de neurones. Une des particularités du mode de réalisation de la figure 9 est que l'hologramme est réalisé en réflexion plutôt qu'en transmission.

Plus précisément, le dispositif optique représenté sur la figure 9 comprend les éléments suivants :

- une source lumineuse 34 ;
- un chemin optique configuré de manière à générer un faisceau lumineux de référence **R** comportant un miroir semi-réfléchissant **35,** et les miroirs réfléchissant **36** et **38 ;** et
- une zone permettant à un faisceau issu du premier miroir semi-réfléchissant **35** d'être réfléchi par ledit échantillon **3** de manière à générer un faisceau objet **O** contenant la lumière réfléchie par l'échantillon **3,** et le miroir semi-réfléchissant **37** ; et

- un miroir semi-réfléchissant **37** générant l'hologramme dudit échantillon **3** en additionnant le faisceau de référence issu du miroir réfléchissant **38** par transmission et le faisceau objet par réflexion, et transmettant ledit hologramme en direction du dispositif d'acquisition d'image holographique dont le premier élément est le filtre chromatique **33** ; et transmettant également le faisceau objet O au dispositif d'acquisition de l'image compressée qui comporte une première lentille convergente **21** qui focalise l'image réfléchie par l'échantillon **3** sur une ouverture **22,** un collimateur **23** qui capte les rayons traversant l'ouverture **22** et transmet ces rayons à un réseau de diffraction **24,** une seconde lentille convergente **25** qui focalise ces rayons issus du réseau de diffraction **24** sur la surface de captation **26.**

Dans ces réalisations en réflexion, le contrôle du trajet optique entre l'échantillon 3 et la source lumineuse 34 est nécessaire. Il est réalisé au moyen d'un dispositif de réglage 69 par exemple de type à vis micrométrique disposé entre le porte-échantillon et le miroir 35.

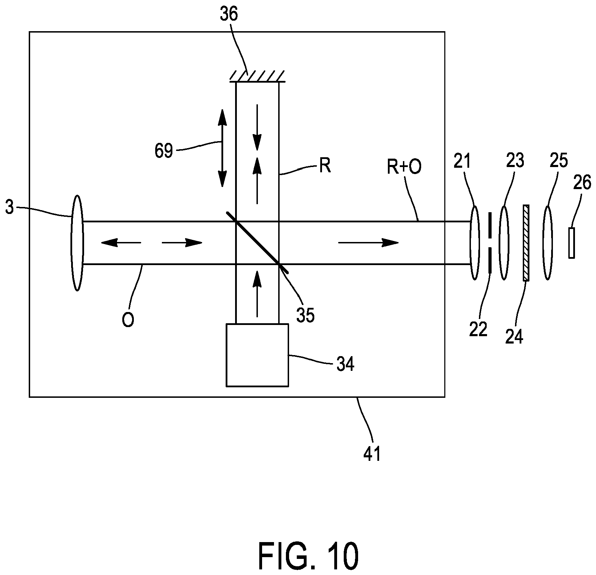

La figure 10 présente schématiquement le montage optique d'un autre mode de réalisation de l'invention. Tout comme dans le mode de réalisation de la figure 8, dans le mode de réalisation de la figure 10, la fusion entre la diffraction et l'hologramme se fait de manière optique. Une des particularités du mode de réalisation de la figure 10 est que l'hologramme est réalisé en réflexion plutôt qu'en transmission. De plus, le nombre de miroirs est réduit, ce qui simplifie la réalisation.

Plus précisément, le dispositif optique représenté sur la figure 10 comprend les éléments suivants :

- une source lumineuse **34** ;
- un chemin optique configuré de manière à générer un faisceau lumineux de référence **R** comportant un miroir semi-réfléchissant **35,** et un miroir réfléchissant **36 ;** et
- une zone permettant à un faisceau issu du premier miroir semi-réfléchissant **35** d'être réfléchi par ledit échantillon **3** de manière à générer un faisceau objet **O** contenant la lumière réfléchie par l'échantillon **3,** et à nouveau le miroir semi-réfléchissant **35** générant l'hologramme dudit échantillon **3** en additionnant le faisceau de référence issu du miroir réfléchissant **36** et le faisceau objet par réflexion sur l'échantillon, et transmettant ledit hologramme en direction du dispositif d'acquisition ;
- le dispositif d'acquisition qui comporte une première lentille convergente **21** qui focalise l'image holographique de l'échantillon **3** sur une ouverture **22,** un collimateur **23** capte les rayons traversant l'ouverture **22** et transmet ces rayons à un réseau de diffraction **24,** une seconde lentille convergente **25** qui focalise ces rayons issus du réseau de diffraction **24** sur la surface de captation **26.**

Dans cette réalisation, le dispositif de réglage 69 est par exemple disposé entre le miroir 35 et le miroir 36 afin d'ajuster la position du miroir 36.

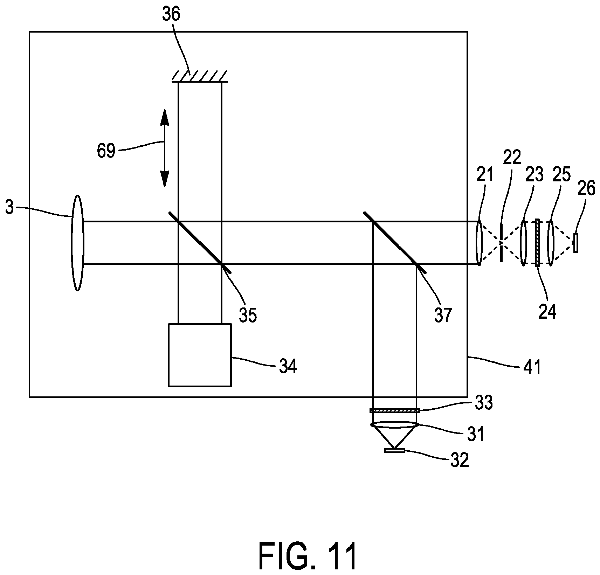

La figure 11 présente schématiquement le montage optique d'un autre mode de réalisation de l'invention. Tout comme dans le mode de réalisation de la figure 3, dans le mode de réalisation de la figure 11, la fusion entre la compression et l'hologramme se fait par le réseau de neurones. Une des particularités du mode de réalisation de la figure 11 est que l'hologramme est réalisé en réflexion plutôt qu'en transmission. De plus, le nombre de miroirs est réduit, ce qui simplifie la réalisation.

Plus précisément, le dispositif optique représenté sur la figure 11 comprend les éléments suivants :

- une source lumineuse 34 ;
- un chemin optique configuré de manière à générer un faisceau lumineux de référence **R** comportant un miroir semi-réfléchissant **35,** et un miroir réfléchissant **36;** et
- une zone permettant à un faisceau issu du premier miroir semi-réfléchissant **35** d'être réfléchi par ledit échantillon **3** de manière à générer un faisceau objet **O** contenant la lumière réfléchie par l'échantillon **3;** et
- le miroir semi-réfléchissant **35** d'une part générant l'hologramme dudit échantillon **3** en additionnant le faisceau de référence issu du miroir réfléchissant **36** et le faisceau objet, et transmettant ledit hologramme en direction du miroir semi-réfléchissant **37,**
- le miroir semi-réfléchissant **37** séparant ce signal d'une part en direction du dispositif d'acquisition d'image holographique dont le premier élément est le filtre chromatique **33** ; et d'autre part au dispositif d'acquisition de l'image compressée qui comporte une première lentille convergente **21** qui focalise l'image réfléchie par l'échantillon **3** sur une ouverture **22,** un collimateur **23** qui capte les rayons traversant l'ouverture **22** et transmet ces rayons à un réseau de diffraction **24,** une seconde lentille convergente **25** qui focalise ces rayons issus du réseau de diffraction **24** sur la surface de captation **26.**

Certains des procédés décrits ici peuvent être mis en oeuvre partiellement par un processeur d'un ordinateur exécutant un programme d'ordinateur comprenant des instructions pour la mise en oeuvre de ces procédés. Le programme d'ordinateur peut être enregistré sur un support lisible par un ordinateur.

Références

Dispositif de capture 2
Echantillon 3
Image holographique 12
Image compressée 11
Réseau de neurones 13
Image 14
Lentille convergente 21
Ouverture 22
Collimateur 23
Réseau de diffraction 24
Seconde lentille convergente 25
Surfaces de captation 26, 32
Lentille convergente 31
Dispositif d'illumination 34
Miroir semi-réfléchissant 35, 37, 38
Miroir réfléchissant 36
Dispositif optique 41
Couche 50
Encodeur 51
Décodeur 53
Source de lumière mono-chromatique et cohérente 61
Système optique 62
Rayons lumineux 63
Source de lumière blanche multi-chromatique et non-cohérente 64
Première lentille convergente 65
Rayons lumineux 66
Prisme 67
Rayon lumineux 68
dispositif de réglage 69

**Revendications**

**1.** Dispositif de mesure et d'analyse (1) holographique et hyperspectrale (2) d'un échantillon (3), ledit dispositif comportant :

- un dispositif d'acquisition (2) d'une image contenant les informations spectrale et d'amplitude du signal lumineux illuminant ledit échantillon (3) ; et des figures d'interférences holographiques (12) d'un faisceau lumineux de référence (R) et d'un faisceau lumineux (O) ayant illuminé ledit échantillon (3) contenant les informations d'amplitude et de phase du signal lumineux illuminant ledit échantillon ; et
- un dispositif d'illumination (34) dudit échantillon (3) ; et
- un dispositif de reconstruction de l'image holographique hyperspectrale et d'analyse des propriétés d'amplitude, de phase et de spectre de la lumière illuminant (O) ledit échantillon (3) intégrant un réseau de neurones profond et convolutif (13) architecturé pour calculer une probabilité de présence de la ou les particularités recherchées dans ledit échantillon (3) depuis l'image holographique hyperspectrale, et générant une image pour chaque particularité recherchée (14) dont la valeur de chaque pixel aux cordonnées *x et y* correspond à la probabilité de présence de ladite particularité aux mêmes coordonnées *x et y* dudit échantillon (3).

**2.** Dispositif selon la revendication 1, dans lequel le dispositif d'acquisition (2) comprend d'une part un dispositif d'acquisition d'une image compressée (11) de l'échantillon (3) contenant lesdites informations spectrale et d'amplitude du signal lumineux illuminant, notamment traversant ou réfléchi par l'échantillon, et d'autre part un dispositif d'acquisition d'une image desdites figures d'interférences holographiques (12), dans lequel le réseau de neurones (13) est architecturé pour calculer la probabilité de présence de la ou les particularités recherchées dans ledit échantillon (3) depuis l'image compressée (11) et la figure d'interférences holographiques (12) du faisceau de référence (R)

avec le faisceau illuminant, notamment traversant ou réfléchi par (O) l'échantillon (3), ledit réseau de neurones profond et convolutif (13) étant architecturé de façon à fusionner les informations des capteurs de l'image diffractée (11) et de l'image de la figure d'interférence holographique (12).

**3.** Dispositif selon la revendication 2, ***dans lequel*** le dispositif d'illumination (34) dudit échantillon (3) comprend une source lumineuse (34) collimatée et configurée de manière à générer un faisceau lumineux, ***dans lequel*** le dispositif d'acquisition (2) de ladite image diffractée et de ladite image des figures d'interférences holographique (12) comporte :

- un premier miroir semi-réfléchissant (35) séparant le faisceau lumineux issu de ladite source lumineuse (34) en deux faisceaux lumineux : un premier faisceau, faisceau objet (O), traversant l'échantillon (3) et un second faisceau, faisceau référence (R), en direction d'un second miroir réfléchissant (36) ; et
- le second miroir réfléchissant (36) dirigeant ledit faisceau lumineux de référence (R) en direction d'un troisième miroir semi-réfléchissant (37) ; et
- le troisième miroir semi-réfléchissant (37), additionnant ledit faisceau référence (R) avec ledit faisceau objet (O) et transmis en direction d'un filtre chromatique (33) ; et
- une zone dans laquelle ledit échantillon (3) peut être positionné de manière à être traversé par ledit faisceau lumineux objet (O) ; et
- un quatrième miroir semi-réfléchissant (38), séparant ledit faisceau objet (O) issu de la zone dans laquelle ledit échantillon (3) peut être positionné en deux faisceaux : un troisième faisceau étant transmis en direction du troisième miroir semi-réfléchissant (37) et un quatrième faisceau étant transmis en direction d'une première lentille convergente (21) ; et
- la première lentille convergente (21) configurée pour imager ledit échantillon (3) sur une ouverture (22) ; et
- un collimateur (23) configuré pour capter le faisceau traversant ladite ouverture (22) et pour transmettre ce faisceau sur un réseau de diffraction (24) ; et
- une seconde lentille convergente (25) configurée pour focaliser les rayons issus du réseau de diffraction (24) sur une surface de captation (26).
- le filtre chromatique (33) configuré pour filtrer les longueurs d'ondes desdits faisceaux objet (O) et référence (R), additionnés et interférés sous forme d'hologramme sur le troisième miroir semi-réfléchissant (37) ; et
- une troisième lentille convergente (31) configurée pour focaliser les rayons hologrammes issus du filtre chromatique (33) sur une surface de captation (32).

**4.** Dispositif selon la revendication 1, dans lequel le dispositif d'acquisition comprend un dispositif d'acquisition unique d'une image compressée des figures d'interférences holographiques de l'échantillon.

**5.** Dispositif selon la revendication 4, ***dans lequel*** le dispositif d'illumination (34) dudit échantillon (3) comprend une source lumineuse (34) collimatée et configurée de manière à générer un faisceau lumineux, ***dans lequel*** le dispositif d'acquisition (2) comporte :

- un premier miroir semi-réfléchissant (35) séparant le faisceau lumineux issu de ladite source lumineuse (34) en deux faisceaux lumineux : un premier faisceau, faisceau objet (O), illuminant l'échantillon (3) et un second faisceau, faisceau référence (R); et
- une zone dans laquelle ledit échantillon (3) peut être positionné de manière à être imagé par ledit faisceau lumineux objet (O) ; et
- un système de miroirs adaptés pour faire interférer les faisceaux objet et de référence,
- une première lentille convergente (21) configurée pour imager ledit hologramme de l'échantillon (3) sur une ouverture (22) ; et
- un collimateur (23) configuré pour capter le faisceau traversant ladite ouverture (22) et pour transmettre ce faisceau sur un réseau de diffraction (24) ; et
- une seconde lentille convergente (25) configurée pour focaliser les rayons issus du réseau de diffraction (24) sur une surface de captation (26).

**6.** Dispositif selon l'une des revendications 1 à 5, ***dans lequel*** ledit dispositif d'illumination (34) est obtenu par une source lumineuse comportant :

- une première source de lumière blanche, multi-chromatique et non-cohérente (64) ; et
- une première lentille convergente (65) configurée pour collimater les rayons lumineux issus de ladite première source de lumière blanche, multi-chromatique et non-cohérente (64) ; et

- une seconde source de lumière, mono-chromatique et cohérente (61) ; et
- un système optique (62) d'expansion du faisceau configuré pour étendre et collimater les rayons lumineux issus de ladite seconde source de lumière mono-chromatique et cohérente (61) ; et
- un prisme (67) configuré pour additionner les rayons lumineux (63) issus de ladite source de lumière mono-chromatique et cohérente (61) et les rayons lumineux (66) issus de ladite source de lumière blanche, multi-chromatique et non-cohérente (64) dans un faisceau lumineux (68).

**7.** Dispositif selon l'une des revendications 1 à 6, ***dans lequel*** ladite figure d'interférences holographique (12) est obtenue par un capteur (32) infrarouge ou par un capteur (32) dont la longueur d'onde est comprise entre 300 nanomètres et 2000 nanomètres.

**8.** Dispositif selon l'une des revendications 1 à 7, ***dans lequel*** ladite image compressée (11) est obtenue par un capteur (26) infrarouge.

**9.** Dispositif selon l'une des revendications 1 à 7, ***dans lequel*** ladite image compressée (11) est obtenue par un capteur (26) dont la longueur d'onde est comprise entre 300 nanomètre et 2000 nanomètres.

**10.** Dispositif selon l'une des revendications 1 à 9, ***dans lequel*** ladite particularité recherchée dans ledit échantillon (3) est la présence d'un genre et d'une espèce de bactérie dans un échantillon (3) de salive, de prélèvement de tartre dentaire, de sécrétions nasales, de sang ou d'urine contenant un ensemble de bactéries de différents genres et différentes espèces.

**11.** Dispositif selon l'une des revendications 1 à 9, ***dans lequel*** ladite particularité recherchée dans ledit échantillon (3) est la présence d'une molécule ou d'un ensemble de molécules présentant une transmittance particulière dans le spectre lumineux concerné par l'analyse.

**12.** Dispositif selon l'une des revendications 1 à 9, ***dans lequel*** ladite particularité recherchée dans ledit échantillon (3) est la présence de gamètes dans un échantillon (3) de sperme.

**13.** Dispositif selon l'une des revendications 1 à 12, dans lequel le réseau de neurones est architecturé en outre pour détecter une image microscopique de l'échantillon à partir de l'image holographique hyperspectrale.

**14.** Procédé de mesure et d'analyse (1) holographique et hyperspectrale (2) d'un échantillon (3), ledit procédé comportant :

- un dispositif d'illumination (34) illumine ledit échantillon (3) ; et
- un dispositif d'acquisition (2) acquiert une image contenant les informations spectrale et d'amplitude du signal lumineux illuminant ledit échantillon (3) ; et des figures d'interférences holographiques (12) d'un faisceau lumineux de référence (R) et d'un faisceau lumineux (O) ayant illuminé ledit échantillon (3) contenant les informations d'amplitude et de phase du signal lumineux illuminant ledit échantillon ; et
- un dispositif de reconstruction de l'image holographique hyperspectrale et d'analyse des propriétés d'amplitude, de phase et de spectre de la lumière illuminant (O) ledit échantillon (3) intègre un réseau de neurones profond et convolutif (13) architecturé pour calculer une probabilité de présence de la ou les particularités recherchées dans ledit échantillon (3) depuis l'image holographique hyperspectrale, et générer une image pour chaque particularité recherchée (14) dont la valeur de chaque pixel aux cordonnées *x et y* correspond à la probabilité de présence de ladite particularité aux mêmes coordonnées *x et y* dudit échantillon (3).

**15.** Programme d'ordinateur comprenant des instructions qui conduisent l'appareil selon la revendication 1 à exécuter le procédé de la revendication 14.

**Patentansprüche**

**1.** Vorrichtung zum holographischen und hyperspektralen (2) Messen und Analysieren (1) einer Probe (3), wobei die genannte Vorrichtung Folgendes umfasst:

- eine Vorrichtung (2) zum Erfassen eines Bildes, das die Spektral- und Amplitudeninformationen des die genannte Probe (3) beleuchtenden Lichtsignals enthält; und holographischer Interferenzmuster (12) eines Referenzlichtstrahls (R) und eines Lichtstrahls (O), der die genannte Probe (3) beleuchtet hat, die die Amplituden- und Phaseninformationen des die genannte Probe beleuchtenden Lichtsignals enthalten; und
- eine Vorrichtung (34) zum Beleuchten der genannten Probe (3); und
- eine Vorrichtung zum Rekonstruieren des hyperspektralen holographischen Bildes und zum Analysieren der Amplituden-, Phasen- und Spektrumeigenschaften des die genannte Probe (3) beleuchtenden Lichts (O), die ein tiefes und gefaltetes neuronales Netz (13) integriert, das zum Berechnen einer Wahrscheinlichkeit des Vorhandenseins der gesuchten Besonderheit(en) in der genannten Probe (3) aus dem hyperspektralen holographischen Bild aufgebaut ist, und ein Bild für jede gesuchte Besonderheit (14) erzeugt, wobei der Wert jedes Pixels an den x- und y-Koordinaten der Wahrscheinlichkeit des Vorhandenseins der genannten Besonderheit an denselben x- und y-Koordinaten der genannten Probe (3) entspricht.

**2.** Vorrichtung nach Anspruch 1, wobei die Erfassungsvorrichtung (2) einerseits eine Vorrichtung zum Erfassen eines komprimierten Bildes (11) der Probe (3), das die genannten Spektral- und Amplitudeninformationen des die Probe beleuchtenden, insbesondere dadurch gehenden oder davon reflektierten, Lichtsignals enthält, und andererseits eine Vorrichtung zum Erfassen eines Bildes der genannten holographischen Interferenzmuster (12) umfasst, wobei das neuronale Netz (13) zum Berechnen der Wahrscheinlichkeit des Vorhandenseins der gesuchten Besonderheit(en) in der genannten Probe (3) aus dem komprimierten Bild (11) und dem holographischen Interferenzmuster (12) des Referenzstrahls (R) mit dem die Probe (3) beleuchtenden, insbesondere dadurch gehenden oder davon reflektierten, Strahl (O) aufgebaut ist, insbesondere durch (O) die Probe (3) geht oder davon reflektiert wird, wobei das genannte tiefe und gefaltete neuronale Netz (13) so aufgebaut ist, dass es die Informationen der Sensoren des gebeugten Bildes (11) und des Bildes des holographischen Interferenzmusters (12) fusioniert.

**3.** Vorrichtung nach Anspruch 2, ***wobei*** die Vorrichtung (34) zum Beleuchten der genannten Probe (3) eine Lichtquelle (34) umfasst, die kollimiert und zum Erzeugen eines Lichtstrahls konfiguriert ist, ***wobei*** die Vorrichtung (2) zum Erfassen des genannten gebeugten Bildes und des genannten Bildes der holographischen Interferenzmuster (12) Folgendes umfasst:

- einen ersten teilreflektierenden Spiegel (35), der den Lichtstrahl von der genannten Lichtquelle (34) in zwei Lichtstrahlen aufteilt: einen ersten Strahl, Objektstrahl (O), der durch die Probe (3) geht, und einen zweiten Strahl, Referenzstrahl (R), der in Richtung eines zweiten reflektierenden Spiegels (36) geht; und
- den zweiten reflektierenden Spiegel (36), der den genannten Referenzlichtstrahl (R) in Richtung eines dritten teilreflektierenden Spiegels (37) lenkt; und
- den dritten teilreflektierenden Spiegel (37), der den genannten Referenzstrahl (R) mit dem genannten Objektstrahl (O) addiert und in Richtung eines Farbfilters (33) übertragen wird; und
- eine Zone, in der die genannte Probe (3) so positioniert werden kann, dass sie von dem genannten Objektlichtstrahl (O) durchquert wird; und
- einen vierten teilreflektierenden Spiegel (38), der den genannten Objektstrahl (O) aus der Zone, in der die genannte Probe (3) positioniert werden kann, in zwei Strahlen aufteilt: einen dritten Strahl, der in Richtung des dritten teilreflektierenden Spiegels (37) übertragen wird, und einen vierten Strahl, der in Richtung einer ersten Sammellinse (21) übertragen wird; und
- die erste Sammellinse (21), die zum Abbilden der genannten Probe (3) auf eine Öffnung (22) konfiguriert ist; und
- einen Kollimator (23), der zum Einfangen des durch die genannte Öffnung (22) gehenden Strahls und zum Übertragen dieses Strahls auf ein Beugungsgitter (24) konfiguriert ist; und
- eine zweite Sammellinse (25), die zum Fokussieren der vom Beugungsgitter (24) ausgehenden Strahlen auf eine Einfangfläche (26) konfiguriert ist;
- das Farbfilter (33), das zum Herausfiltern der Wellenlängen der genannten Objekt-(O) und Referenzstrahlen (R) konfiguriert ist, die summiert und in Hologrammform auf dem dritten teilreflektierenden Spiegel (37) interferiert werden; und
- eine dritte Sammellinse (31), die zum Fokussieren der Hologrammstrahlen aus dem Farbfilter (33) auf eine Einfangfläche (32) konfiguriert ist.

**4.** Vorrichtung nach Anspruch 1, wobei die Erfassungsvorrichtung eine Vorrichtung zur einmaligen Erfassung eines komprimierten Bildes der holographischen Interferenzmuster der Probe umfasst.

**5.** Vorrichtung nach Anspruch 4, ***wobei*** die Vorrichtung (34) zum Beleuchten der genannten Probe (3) eine Lichtquelle (34) umfasst, die kollimiert und zum Erzeugen eines Lichtstrahls konfiguriert ist, ***wobei*** die Erfassungsvorrichtung (2) Folgendes umfasst:

- einen ersten teilreflektierenden Spiegel (35), der den Lichtstrahl von der genannten Lichtquelle (34) in zwei Lichtstrahlen aufteilt: einen ersten Strahl, Objektstrahl (O), der die Probe (3) beleuchtet, und einen zweiten Strahl, Referenzstrahl (R); und
- eine Zone, in der die genannte Probe (3) so positioniert werden kann, dass sie von dem genannten Objektlichtstrahl (O) abgebildet wird; und
- ein System von Spiegeln, die zum Interferierenlassen des Objekt- und Referenzstrahls ausgelegt sind,
- eine erste Sammellinse (21), die zum Abbilden des genannten Hologramms der Probe (3) auf eine Öffnung (22) konfiguriert ist; und
- einen Kollimator (23), der zum Einfangen des durch die genannte Öffnung (22) gehenden Strahls und zum Übertragen dieses Strahls auf ein Beugungsgitter (24) konfiguriert ist; und
- eine zweite Sammellinse (25), die zum Fokussieren der vom Beugungsgitter (24) ausgehenden Strahlen auf eine Einfangfläche (26) konfiguriert ist.

**6.** Vorrichtung nach einem der Ansprüche 1 bis 5, ***wobei*** die genannte Beleuchtungsvorrichtung (34) durch eine Lichtquelle erhalten wird, die Folgendes umfasst:

- eine erste weiße, multichromatische und nicht-kohärente Lichtquelle (64); und
- eine erste Sammellinse (65), die zum Kollimieren der Lichtstrahlen von der genannten ersten weißen, multichromatischen und nicht-kohärenten Lichtquelle (64) konfiguriert ist; und
- eine zweite monochromatische und kohärente Lichtquelle (61); und
- ein optisches Strahlaufweitungssystem (62), das zum Aufweiten und Kollimieren der Lichtstrahlen von der genannten zweiten monochromatischen und kohärenten Lichtquelle (61) konfiguriert ist; und
- ein Prisma (67), das zum Addieren der Lichtstrahlen (63) von der genannten monochromatischen und kohärenten Lichtquelle (61) und der Lichtstrahlen (66) von der genannten weißen, multichromatischen und nicht-kohärenten Lichtquelle (64) zu einem Lichtstrahl (68) konfiguriert ist.

**7.** Vorrichtung nach einem der Ansprüche 1 bis 6, ***wobei*** das genannte holographische Interferenzmuster (12) durch einen Infrarotsensor (32) oder durch einen Sensor (32) mit einer Wellenlänge zwischen 300 Nanometer und 2000 Nanometer erhalten wird.

**8.** Vorrichtung nach einem der Ansprüche 1 bis 7, ***wobei*** das genannte komprimierte Bild (11) durch einen Infrarotsensor (26) erhalten wird.

**9.** Vorrichtung nach einem der Ansprüche 1 bis 7, ***wobei*** das genannte komprimierte Bild (11) durch einen Sensor (26) mit einer Wellenlänge zwischen 300 Nanometer und 2000 Nanometer erhalten wird.

**10.** Vorrichtung nach einem der Ansprüche 1 bis 9, ***wobei*** die genannte gesuchte Besonderheit in der genannten Probe (3) das Vorhandensein einer Bakteriengattung und -spezies in einer Speichel-, Zahnstein-, Nasensekret-, Blut- oder Urinprobe (3) ist, die eine Gruppe von Bakterien verschiedener Gattungen und Spezies enthält.

**11.** Vorrichtung nach einem der Ansprüche 1 bis 9, ***wobei*** die genannte gesuchte Besonderheit in der genannten Probe (3) das Vorhandensein eines Moleküls oder einer Gruppe von Molekülen mit einer besonderen Transmission in dem von der Analyse betroffenen Lichtspektrum ist.

**12.** Vorrichtung nach einem der Ansprüche 1 bis 9, ***wobei*** die genannte gesuchte Besonderheit in der genannten Probe (3) das Vorhandensein von Gameten in einer Spermaprobe (3) ist.

**13.** Vorrichtung nach einem der Ansprüche 1 bis 12, wobei das neuronale Netz ferner zum Erkennen eines mikroskopischen Bildes der Probe auf der Basis des hyperspektralen holographischen Bildes aufgebaut ist.

**14.** Verfahren zum holographischen und hyperspektralen (2) Messen und Analysieren (1) einer Probe (3), wobei das genannte Verfahren Folgendes beinhaltet:

- eine Beleuchtungsvorrichtung (34) beleuchtet die genannte Probe (3); und
- eine Erfassungsvorrichtung (2) erfasst ein Bild, das die Spektral- und Amplitudeninformationen des die genannte Probe (3) beleuchtenden Lichtsignals enthält; und holographische Interferenzmuster (12) eines Referenzlichtstrahls (R) und eines Lichtstrahls (O), der die genannte Probe (3) beleuchtet hat, die die Amplituden- und Phaseninformationen des die genannte Probe beleuchtenden Lichtsignals enthalten; und

- eine Vorrichtung zum Rekonstruieren des hyperspektralen holographischen Bildes und zum Analysieren der Amplituden-, Phasen- und Spektrumeigenschaften des die genannte Probe (3) beleuchtenden Lichts (O), ein tiefes und gefaltetes neuronales Netz (13) integriert, das zum Berechnen einer Wahrscheinlichkeit des Vorhandenseins der gesuchten Besonderheit(en) in der genannten Probe (3) aus dem hyperspektralen holographischen Bild und zum Erzeugen eines Bildes für jede gesuchte Besonderheit (14) aufgebaut ist, wobei der Wert jedes Pixels an den x- und y-Koordinaten der Wahrscheinlichkeit des Vorhandenseins der genannten Besonderheit an denselben x- und y-Koordinaten der genannten Probe (3) entspricht.

**15.** Computerprogramm mit Befehlen, die das Gerät nach Anspruch 1 veranlassen, das Verfahren nach Anspruch 14 auszuführen.

### Claims

**1.** Device (1) for holographic and hyperspectral (2) measuring and analyzing of a sample (3), said device comprising:

- an acquisition device (2) of an image containing spectral and amplitude information of the light signal illuminating said sample (3); and holographic interference figures (12) of a reference light beam (R) and of a light beam (O) having illuminated said sample (3) containing the amplitude and phase information of the light signal illuminating said sample; and
- an illumination device (34) of said sample (3); and
- a device for reconstructing the hyperspectral holographic image and analyzing the amplitude, phase and spectrum properties of the light illuminating (O) said sample (3) integrating a deep and convolutional neural network (13) architectured for calculating a probability of presence of the particularity (-ies) sought in said sample (3) from the hyperspectral holographic image, and generating an image (14) for each sought particularity whose value of each pixel at the x and y coordinates corresponds to the probability presence of said particularity at the same x and y coordinates of said sample (3).

**2.** Device according to Claim 1, in which the acquisition device (2) comprises on the one hand a device for acquiring a compressed image (11) of the sample (3) containing said spectral and amplitude information of the illuminating light signal, in particular passing through or reflected by the sample, and on the other hand a device for acquiring an image of said holographic interference figures (12), in which the neural network (13) is architectured to calculate the probability of the presence of the particularity(-ies) sought in said sample (3) from the compressed image (11) and the figure (12) of holographic interference of the reference beam (R) with the illuminating beam, in particular passing through or reflected by (O) the sample (3), said deep convolutional neural network (13) being architectured so as to merge the information from the sensors of the diffracted image (11) and of the image of the holographic interference figure (12).

**3.** Device according to claim 2, in which the illumination device (34) of said sample (3) comprises a light source (34) collimated and configured so as to generate a light beam, in which the acquisition device (2) for acquiring said diffracted image and said image of the holographic interference figures (12) comprises:

- a first semi-reflecting mirror (35) separating the light beam from said light source (34) into two light beams: a first beam, object beam (O), passing through the sample (3) and a second beam, reference beam (R), towards a second reflecting mirror (36); and
- the second reflecting mirror (36) directing said reference light beam (R) towards a third semi-reflecting mirror (37); and
- the third semi-reflecting mirror (37), adding said reference beam (R) with said object beam (O) and transmitted towards a chromatic filter (33); and
- an area in which said sample (3) can be positioned so as to be traversed by said object light beam (O); and
- a fourth semi-reflective mirror (38), separating said object beam (O) coming from the area in which said sample (3) can be positioned into two beams: a third beam being transmitted in the direction of the third semi-reflecting mirror (37 ) and a fourth beam being transmitted towards a first converging lens (21); and
- the first converging lens (21) configured to image said sample (3) over an opening (22); and
- a collimator (23) configured to pick up the beam passing through said opening (22) and to transmit this beam on a diffraction grating (24); and
- a second converging lens (25) configured to focus the rays coming from the diffraction grating (24) on a capture surface (26).

- the chromatic filter (33) configured to filter the wavelengths of said object (O) and reference (R) beams, added and interfered into a hologram on the third semi-reflecting mirror (37); and
- a third converging lens (31) configured to focus the hologram rays coming from the chromatic filter (33) on a capture surface (32).

**4.** The device of claim 1, wherein the acquisition device comprises a single device for acquiring a compressed image of the holographic interference figures of the sample.

**5.** Device according to Claim 4, in which the illumination device (34) for illuminating said said sample (3) comprises a light source (34) collimated and configured so as to generate a light beam, in which the acquisition device (2) comprises :

- a first semi-reflecting mirror (35) separating the light beam from said light source (34) into two light beams: a first beam, object beam (O), illuminating the sample (3) and a second beam, reference beam (R); and
- an area in which said sample (3) can be positioned so as to be imaged by said object light beam (O); and
- a system of mirrors adapted to have the object and reference beams interfere,
- a first converging lens (21) configured to image said hologram of the sample (3) on an opening (22); and
- a collimator (23) configured to pick up the beam passing through said opening (22) and to transmit this beam on a diffraction grating (24); and
- a second converging lens (25) configured to focus the rays coming from the diffraction grating (24) on a capture surface (26).

**6.** Device according to one of claims 1 to 5, wherein said illumination device (34) is obtained by a light source comprising:

- a first source of white, multi-chromatic and non-coherent light (64); and
- a first converging lens (65) configured to collimate light rays from said first source of white, multi-chromatic and non-coherent light (64); and
- a second source of monochromatic and coherent light (61); and
- a beam expanding optical system (62) configured to extend and collimate light rays from said second monochromatic and coherent light source (61); and
- a prism (67) configured to add the light rays (63) from said source of mono-chromatic and coherent light (61) and the light rays (66) from said source of white, multi-chromatic and non-coherent light (64) in a light beam (68).

**7.** Device according to one of claims 1 to 6, wherein said holographic interference figure (12) is obtained by an infrared sensor (32) or by a sensor (32) whose wavelength is between 300 nanometers and 2000 nanometers.

**8.** Device according to one of claims 1 to 7, wherein said compressed image (11) is obtained by an infrared sensor (26).

**9.** Device according to one of claims 1 to 7, wherein said compressed image (11) is obtained by a sensor (26) whose wavelength is between 300 nanometers and 2000 nanometers.

**10.** Device according to one of claims 1 to 9, wherein said particularity sought in said sample (3) is the presence of a kind and a species of bacteria in a sample (3) of saliva, of dental tartar sampling, nasal secretions, blood or urine containing a set of bacteria of different kinds and different species.

**11.** Device according to one of claims 1 to 9, wherein said particularity sought in said sample (3) is the presence of a molecule or of a set of molecules exhibiting a particular transmittance in the light spectrum concerned by the analysis.

**12.** Device according to one of claims 1 to 9, wherein said desired feature in said sample (3) is the presence of gametes in a sample (3) of sperm.

**13.** Apparatus according to any of claims 1 to 12, wherein the neural network is further designed to detect a microscopic image of the sample from the hyperspectral holographic image.

**14.** Method for holographic and hyperspectral (2) measuring and analyzing (1) of a sample (3), said method comprising:

- an illumination device (34) illuminates said sample (3); and
- an acquisition device (2) acquires an image containing the spectral and amplitude information of the light signal illuminating said sample (3); and holographic interference figures (12) of a reference light beam (R) and of a light beam (O) having illuminated said sample (3) containing the amplitude and phase information of the light signal illuminating said sample; and

- a device for reconstructing the hyperspectral holographic image and analyzing the amplitude, phase and spectrum properties of the light illuminating (O) said sample (3) integrates a deep and convolutional neural network (13) architectured to calculate a probability of presence of the particularity (ies) sought in said sample (3) from the hyperspectral holographic image, and generate an image (14) for each sought particularity whose value of each pixel at the x and y coordinates corresponds to the probability of presence of said particularity at the same x and y coordinates of said sample (3).

**15.** A computer program comprising instructions which cause the apparatus of claim 1 to perform the method of claim 14.

[Fig. 1]

1
2
3
[Fig. 1]

[Fig. 2]

21
22
23
24
25
26
41
40
Optique
33
31
32
Échantillon
3
2
11
13
14
Réseau
de
neurones
Image
sortie
12
1
[Fig. 2]

[Fig. 3]

[Fig. 4]

51
13
50
11
14
Fusion par
couches
entièrement
connectée
Image
sortie
12
53
52

[Fig.4]

11
R7
R6
R0
50
14
R5
C
R1
R4
R3
R2
50
12

FIG. 5

[Fig. 6]

68
63
67
34
61
62
66
65
64

[Fig. 6]

26
25
24
23
22
21
38
37
O
3
36
35
R
34
41

FIG. 7

36
38
R
O
3
21
23
25
26
35
37
R+O
22
24
69
34
41

FIG. 8

36
R
38
O
3
21
22
23
25
26
35
37
R+O
24
69
R+O
41
34
33
31
32

FIG. 9

36
69
R
R+O
21
23
25
26
3
O
35
22
24
34
41

FIG. 10

36
69
3
35
37
21
22
23
25
26
24
34
41
33
31
32

FIG. 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2009154765 A1


### Littérature non-brevet citée dans la description


- Non-scanning imaging spectrometry. **DESCOUR, MICHAEL ROBERT.** thèse. The university of Arizona, 1994
- **NATHAN HAGEN ; MICHAEL W. KUDENOV.** Review of snapshot spectral imaging technologies. *Optical Engineering,* Septembre 2013, vol. 52 (9
- **PATRICE TANKAM.** Méthodes d'holographie numérique couleur pour la métrologie sans contact en acoustique et mécanique. *thèse,* 2011
- **H. BOURLARD ; Y KAMP. A.** auto-association by multilayer perceptrons and singular value décomposition. *Biological cybernetics,* 1988, vol. 59 (4), ISSN 0340-1200, 291-294
- **J. MARIA ; J. AMARO ; G. FALCAO ; L. A. ALEXANDRE.** Stacked Autoencoders Using Low-Power Accelerated Architectures for Object Recognition in Autonomous Systems. *Neural Processing Letters,* 2016, vol. 43 (2), 445-458
- Multimodal deep learning for robust rgb-d object recognition. In Intelligent Robots and Systems (IROS). **EITEL, A. ; SPRINGENBERG, J. T. ; SPINELLO, L. ; RIEDMILLER, M. ; BURGARD, W.** IEEE/RSJ International Conférence on. IEEE, 2015, 681-687
- **VIJAY BADRINARAYANAN ; ALEX KENDALL ; ROBERTO CIPOLLA.** *SegNet: A Deep Convolutional Encoder-Decoder Architecture for Image Segmentation*
- Multimodal deep leaming for robust rgb-d object recognition. In Intelligent Robots and Systems (IROS). **EITEL, A. ; SPRINGENBERG, J. T. ; SPINELLO, L. ; RIEDMILLER, M. ; BURGARD, W.** IEEE/RSJ International Conférence on. IEEE, 2015, 681-687
- Computed-tomography imaging spectrometer : experimental calibration and reconstruction results. *APPLIED OPTICS,* 1995, vol. 34 (22
- Practical Spectral Photography. *Eurographics,* 2012, vol. 31 (2
- **SERGEY IOFFE ; CHRISTIAN SZEGEDY.** *Batch Normalization: Accelerating Deep Network Training by Reducing Internai Covariate Shift,* Février 2015
- **YUXIN WU ; KAIMING HE.** Group Normalization. *FAIR,* Juin 2018